(19) Europäisches Patentamt
European Patent Office
Office européen des brevets

(11) EP 1 808 462 B1

(12) **EUROPEAN PATENT SPECIFICATION**

(45) Date of publication and mention of the grant of the patent:
**25.11.2009 Bulletin 2009/48**

(21) Application number: **05805392.7**

(22) Date of filing: **31.10.2005**

(51) Int Cl.:
***C08L 69/00*** *(2006.01)*
***C08K 3/34*** *(2006.01)*
***C08K 5/42*** *(2006.01)*
***C08K 5/54*** *(2006.01)*
***C08L 27/18*** *(2006.01)*
***G09F 9/00*** *(2006.01)*
***G02F 1/1333*** *(2006.01)*

(86) International application number:
**PCT/JP2005/020323**

(87) International publication number:
**WO 2006/049263 (11.05.2006 Gazette 2006/19)**

(54) **RESIN COMPOSITION AND FIXING FRAMES FOR FLAT-PANEL DISPLAYS**

HARZZUSAMMENSETZUNG UND FIXIERRAHMEN FÜR FLACHBILDSCHIRME

COMPOSITION DE RESINE ET CHASSIS DE FIXATION POUR ECRANS PLATS

(84) Designated Contracting States:
**DE FR GB**

(30) Priority: **01.11.2004 JP 2004317838**

(43) Date of publication of application:
**18.07.2007 Bulletin 2007/29**

(73) Proprietor: **Teijin Chemicals, Ltd.**
**Chiyoda-ku**
**Tokyo 100-0013 (JP)**

(72) Inventors:
- **NAKAGAWA, Hidenori,**
  **c/o Teijin Chemicals Ltd.**
  **Tokyo 100-0013 (JP)**
- **KIKUCHI, Seiji,**
  **c/o Teijin Chemicals Ltd.**
  **Tokyo 100-0013 (JP)**
- **TAKAGI, Makoto,**
  **c/o Teijin Chemicals, Ltd.**
  **Tokyo 100-0013 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**WO-A-2004/058894**
**JP-A- 08 152 608**
**JP-A- 2000 160 001**
**JP-A- 2002 294 063**
**JP-A- 2003 082 218**
**JP-A- 2004 027 112**
**JP-A- 2004 035 587**
**JP-A- 2004 035 661**
**JP-A- 2004 250 616**
**JP-A- 2005 015 657**
**JP-A- 2005 154 582**
**JP-A- 2005 206 802**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 808 462 B1

## Description

TECHNICAL FIELD

The present invention relates to a resin composition, a flat panel display fixing frame made of the resin composition and a manufacturing method thereof.

BACKGROUND ART

A flat panel display (may be abbreviated as "FPD" hereinafter) is used in a wide variety of fields such as TVs, digital still cameras, video cameras, personal computers, mobile phones, pinball machines and car navigation systems, making use of its features such as small thickness, lightweight and low power consumption. FPD needs a frame for fixing the body of the display to equipment. A frame is generally used for liquid crystal displays (may be abbreviated as LCD hereinafter). This frame is referred to as "flat panel display fixing frame" (may be referred to as "FPD fixing frame" hereinafter) in the present invention. To fix the FPD fixing frame to equipment, a snap fit structure is now widely used.

The FPD fixing frame is used to fix a display as an electronic apparatus to equipment and must have the following physical properties. That is, the FPD fixing frame must have a certain measure of stiffness to support a display. Since FPD has a power supply, the FPD fixing frame must have high flame retardancy. In recent years, in consideration of an environmental load, it is particularly desired to eliminate the use of a halogen-based flame retardant and a phosphorus-based flame retardant. Further, the FPD fixing frame must have heat resistance and a good appearance.

Various resin compositions which satisfy the above mechanical and thermal requirements have been proposed. For example, patent document 1 discloses an LCD fixing frame which has high stiffness and comprises a polycarbonate resin, a flaky inorganic filler and a fibrous filler. This technology uses glass flakes to provide a fixing frame having high stiffness.

Patent document 2 discloses a flame retardant resin composition which comprises an aromatic polycarbonate resin, a glass filler, titanium oxide and an organic sulfonic acid salt and teaches that it can be used in an LCD fixing frame as well. This technology uses glass flakes to provide a molded product having flame retardancy and high stiffness.

Patent document 3 discloses a flame retardant resin composition which comprises an aromatic polycarbonate resin, an organic alkali metal salt-based flame retardant, an alkoxysilane compound, a fluorine-containing polymer having fibril formability and a silicate mineral such as talc. Patent document 4 also discloses a flame retardant resin composition which comprises an aromatic polycarbonate resin, a fluorine-containing resin having fibril formability and a silicate mineral. Patent document 5 discloses a resin composition which comprises an aromatic polycarbonate resin, a graft copolymer and a copolymer of an aromatic vinyl compound and an inorganic filler such as talc and is suitable for use in parts external or internal to car wheels.

The FPD fixing frame must rarely produce foreign matter in addition to thermal properties and mechanical properties which have been studied in the above known technologies. That is, foreign matter adhering to the FPD fixing frame exerts a bad influence upon an image of FPD. It is considered that foreign matter is produced when a filler coming up to the surface of the FPD fixing frame falls off by rubbing with another member, or burrs produced at the time of molding fall off by rubbing with another member.

Snap fits which are being widely used raise the probability of producing the foreign matter. It is fairly possible that the snap fits are rubbed with another member when they are assembled together and a filler coming up to the surface by the rubbing falls off as foreign matter.

Since the snap fits may have the mating surfaces of a mold cavity on both the male and female sides, burrs are easily produced. Particularly in the case of a large-sized fixing frame or a fixing frame having a thin portion, burrs are readily produced. Burrs easily fall off by rubbing with another member, or when burrs are cut off, a filler may fall off from the cut sections. Rubbing with another member occurs when the FPD fixing frame is carried or handled.

(Patent Document 1) JP-A 8-152608
(Patent Document 2) JP-A 2003-226805
(Patent Document 3) JP-A 2002-294063
(Patent Document 4) JP-A 2003-082218
(Patent Document 5) JP-A 2003-206398

DISCLOSURE OF THE INVENTION

As described above, a filler must be blended to provide stiffness to the FPD fixing frame. However, the filler falls off from the surface of the fixing frame to become foreign matter which exerts a bad influence upon the display of an image of FPD, thereby increasing the fraction defective of FPD. Particularly the snap fit structure of the FPD fixing

frame is a factor of increasing the fall-off probability of the filler.

It is therefore an object of the present invention to provide a resin composition which contains a filler, has excellent stiffness and is suitable for use in a FPD fixing frame. It is another object of the present invention to provide a resin composition which has excellent mar resistance, hardly produces foreign matter, rarely exerts a bad influence upon the display of an image of FPD and is suitable for use in a FPD fixing frame having a snap fit structure.

It is still another object of the present invention to provide a resin composition most suitable for use in a FPD fixing frame having excellent flame retardancy and heat resistance without mixing a halogen-based flame retardant or a phosphorus-based flame retardant.

It is a further object of the present invention to provide an FPD fixing frame made of the resin composition. It is a still further object of the present invention to provide a method of manufacturing an FPD fixing frame.

The inventors of the present invention have found that a resin composition comprising talc having a specific particle diameter, muscovite mica having a specific particle diameter, a polycarbonate resin and other components is excellent in stiffness, flame retardancy, heat resistance, appearance and mar resistance. The present invention has been accomplished based on this finding.

That is, the present invention is a resin composition for use in a flat panel display fixing frame having at least one snap-fit projection, hole or groove, comprising:

(i) 100 parts by weight of an aromatic polycarbonate resin (component A);
(ii) 1 to 30 parts by weight of at least one lamellar silicate mineral (component B) selected from the group consisting of talc having an average particle diameter measured by an X-ray transmission method of 0.5 to 9 $\mu$m (component B-1) and muscovite mica having an average particle diameter measured by a laser diffraction/scattering method of 0.5 to 50 $\mu$m (component B-2);
(iii) 0.01 to 0.6 part by weight of a fluorine-containing dripping preventing agent (component C); and
(iv) 0.001 to 1.0 part by weight of an alkali (earth) metal salt of an organic sulfonic acid (component D).

The present invention is a flat panel display fixing frame having at least one snap-fit projection, hole or groove and comprising:

(i) 100 parts by weight of an aromatic polycarbonate resin (component A);
(ii) 1 to 30 parts by weight of at least one lamellar silicate mineral (component B) selected from the group consisting of talc having an average particle diameter measured by an X-ray transmission method of 0.5 to 9 $\mu$m (component B-1) and muscovite mica having an average particle diameter measured by a laser diffraction/scattering method of 0.5 to 50 $\mu$m (component B-2);
(iii) 0.01 to 0.6 part by weight of a fluorine-containing dripping preventing agent (component C); and
(iv) 0.001 to 1.0 part by weight of an alkali (earth) metal salt of an organic sulfonic acid (component D).

The present invention is a method of manufacturing a flat panel display fixing frame having at least one snap-fit projection, hole or groove, comprising the steps of:

(1) preparing a pellet of a resin composition which comprises (i) 100 parts by weight of an aromatic polycarbonate resin (component A), (ii) 1 to 30 parts by weight of at least one lamellar silicate mineral (component B) selected from the group consisting of talc having an average particle diameter measured by an X-ray transmission method of 0.5 to 9 $\mu$m (component B-1) and muscovite mica having an average particle diameter measured by a laser diffraction/scattering method of 0.5 to 50 $\mu$m (component B-2), (iii) 0.01 to 0.6 part by weight of a fluorine-containing dripping preventing agent (component C), and (iv) 0.001 to 1.0 part by weight of an alkali (earth) metal salt of an organic sulfonic acid (component D), achieves a V-0 rating in the UL 94 vertical burn test on a 1.5 mm-thick test specimen and does not contain a compound having a chemically bonded chlorine atom and bromine atom (step-i);
(2) injection filling the pellet into the cavity of a metal mold (step-ii); and
(3) taking out a flat panel display fixing frame from the cavity of the metal mold (step-iii).

According to the present invention, there is provided a resin composition which is excellent in flame retardancy, heat resistance, stiffness and mar resistance, rarely produces foreign matter when FPD is manufactured, has a good surface appearance and is suitable for use in an FPD fixing frame . Although the reason why the amount of foreign matter which exerts a bad influence upon the display of an image of FPD is reduced in the resin composition of the present invention is unknown, it is assumed to be due to the following functions. Firstly, as the component B has a specific particle diameter or less, the amount of the filler coming out from the surface of a molded product is reduced, whereby force for rubbing it with another member is reduced with the result of a reduction in the probability of fall-off. Secondly, since the component B is softer than glass, force for rubbing it with another member decreases with the result

of a reduction in the probability of fall-off. Since talc has excellent slipperiness, it is excellent in that respect. Thirdly, since the component B has a small particle diameter when it falls off, it has a small bad influence upon the display of an image.

BRIEF DESCRIPTION OF THE DRAWINGS

Fig. 1 is a schematic front view of the front side of a frame prepared in Example and used for evaluation, which has a length in the longitudinal direction of 325 mm, a length in the transverse direction of 400 mm, a length of the diagonal line of the inner end portion of 423 mm (17 inches), a height of 16.5 mm, a width of 16.5 mm, a substantial thickness around the gate of 1 mm and an area ratio of the frame portion of 19 %;
Fig. 2 is a schematic front view of the rear side of the frame;
Fig. 3 is a partially enlarged view of Fig. 2 in which the slant line portion shows the surface of the rear portion;
Fig. 4 is an enlarged view cut on line A-B of Fig. 1 in which the top side shows the front surface and the bottom side shows the rear surface;
Fig. 5 shows the assembly of a liquid crystal display using the frame of the present invention.

Explanations of letters or notations

1 frame
2 upper gates (6 pin gates having a diameter of 1.0 mm)
3 upper liquid crystal cell mounting surface (thickness of 0.5 mm)
4 upper outer snap-fit male portion
5 upper screw hole
6 right gates (5 pin gates having a diameter of 1.0 mm, direction from the surface side is a standard direction for right and left portions)
7 right liquid crystal cell mounting surface (thickness of 0.5 mm)
8 right outer snap-fit male portion
9 right inner snap-fit male portion
10 lower gates (6 pin gates having a diameter of 1.0 mm)
11 lower liquid crystal cell mounting surface (thickness of 0.5 mm)
12 lower outer snap-fit male portion
13 lower screw hole
14 left gates (5 pin gates having a diameter of 1.0 mm)
15 left liquid crystal cell mounting surface (thickness of 0.5 mm)
16 left outer snap-fit male portion
17 left inner snap-fit male portion
18 cut-out portion of liquid crystal cell mounting surface for the measurement of surface roughness
19 height of frame (16.5 mm)
20 thickness of the outer circumference on the front side of frame (1.0 mm)
21 height of the outer circumference on the front side of frame (2.5 mm)
22 interval between the inner circumference and outer circumference on the front side of frame (11.0 mm)
23 height of the inner circumference on the front side of frame (2.5 mm)
24 thickness of the inner circumference on the front side of frame (1.5 mm)
25 height of liquid crystal cell mounting surface (2.5 mm)
26 width of liquid crystal cell mounting surface (3.0 mm)
27 thickness of liquid crystal cell mounting surface (0.5 mm)
28 (10.0 mm)
29 (2.0 mm)
30 (5.0 mm)
31 height of the outer circumference on the rear side of frame (11.5 mm)
32 thickness of the outer circumference on the rear side of frame (1.5 mm)
33 front case
34 LCD
35 Backlight

36 Backlight case
37 Substrate
38 Shield case

BEST MODE FOR CARRYING OUT THE INVENTION

Examples of the flat panel display in the present invention includes an LCD, plasma display, inorganic EL display, organic EL display and field emission display. Out of these, LCD shows the effect of the resin composition of the present invention markedly.
The term "snap fit" as used herein means a structure that a projection formed on the male side fits in a hole or groove formed on the female side when assembling portion made of a pair of male and female are assembled each other. To assemble or disassemble these portions, they must be temporarily distorted until the projection and hole or groove are completely assembled. The structure of the snap-fit projection, hole or groove is not particularly limited and may be any one of the structures which have been used in a large number of resin molded products.

<resin composition>

Details of the present invention will be described hereinunder.

(component A: aromatic polycarbonate resin)

The aromatic polycarbonate resin is obtained by reacting a diphenol with a carbonate precursor. Examples of the reaction include interfacial polymerization method, melt transesterification method, the solid-phase transesterification method of a carbonate prepolymer and the ring-opening polymerization method of a cyclic carbonate compound.
Typical examples of the diphenol used herein include hydroquinone, resorcinol, 4,4'-biphenol, 1,1-bis(4-hydroxphenyl)ethane, 2,2-bis(4-hydroxyphenyl)propane (generally called "bisphenol A"), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl)ester, bis(4-hydroxy-3-methylphenyl)sulfide, 9,9-bis(4-hydroxyphenyl)fluorene and 9,9-bis(4-hydroxy-3-methylphenyl)fluorene. Out of these, bis(4-hydroxyphenyl)alkanes are preferred, and bisphenol A is particularly preferred from the viewpoint of impact resistance. That is, the component A is preferably an aromatic polycarbonate resin consisting of the recurring unit of bisphenol A represented by the following formula and having a viscosity average molecular weight of 10,000 to 30,000.

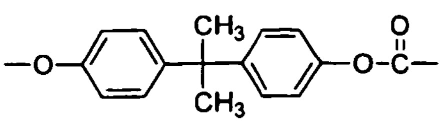

In the present invention, a special aromatic polycarbonate produced from other diphenol may be used as the component A besides the aromatic polycarbonate of bisphenol A which is a general-purpose aromatic polycarbonate.
For example, an aromatic polycarbonate (homopolymer or copolymer) prepared by using 4,4'-(m-phenylenediisopropylidene)diphenol (may be abbreviated as "BPM" hereinafter), 1,1-bis(4-hydroxyphenyl)cyclohexane, 1,1-bis(4-hydroxyphenyl)-3,3,5-trimethylcyclohexane (may be abbreviated as "Bis-TMC" hereinafter), 9,9-bis(4-hydroxyphenyl) fluorene or 9,9-bis(4-hydroxy-3-methylphenyl)fluorene (may be abbreviated as "BCF" hereinafter) as part or all of the diphenol component is suitable for use in fields in which requirements for dimensional change by water absorption and form stability are very severe. A diphenol other than BPA (bisphenol A) is used in an amount of preferably 5 mol% or more, particularly preferably 10 mol% or more based on the total of diphenol components constituting the aromatic polycarbonate.
Particularly when stiffness and resistance to hydrolysis are required, the component A constituting the resin composition is particularly preferably one of the following aromatic copolycarbonates (1) to (3).

(1) A copolycarbonate which comprises 20 to 80 mol% (preferably 40 to 75 mol%, more preferably 45 to 65 mol%) of BPM and 20 to 80 mol% (preferably 25 to 60 mol%, more preferably 35 to 55 mol%) of BCF based on 100 mol%

of the total of diphenol components constituting the aromatic polycarbonate.

(2) A copolycarbonate which comprises 10 to 95 mol% (preferably 50 to 90 mol%, more preferably 60 to 85 mol%) of BPA and 5 to 90 mol% (preferably 10 to 50 mol%, more preferably 15 to 40 mol%) of BCF based on 100 mol% of the total of diphenol components constituting the aromatic polycarbonate.

(3) A copolycarbonate which comprises 20 to 80 mol% (preferably 40 to 75 mol%, more preferably 45 to 65 mol%) of BPM and 20 to 80 mol% (preferably 25 to 60 mol%, more preferably 35 to 55 mol%) of Bis-TMC based on 100 mol% of the total of diphenol components constituting the aromatic polycarbonate.

These aromatic polycarbonates may be used alone or in combination of two or more. They may be mixed with a commonly used bisphenol A type polycarbonate.

As for the production processes and characteristic properties of these polycarbonates, refer to JP-A 6-172508, JP-A 8-27370, JP-A 2001-55435 and JP-A 2002-117580.

Out of the above polycarbonates, polycarbonates whose water absorption coefficient and Tg (glass transition temperature) have been adjusted to the following ranges by controlling their compositions have high resistance to hydrolysis of the polymer itsself and rarely warp after molding.

(i) A polycarbonate having a water absorption coefficient of 0.05 to 0.15 %, preferably 0.06 to 0.13 % and a Tg of 120 to 180˚C, or

(ii) a polycarbonate having a Tg of 160 to 250˚C, preferably 170 to 230˚C and a water absorption coefficient of 0.10 to 0.30 %, preferably 0.13 to 0.30 %, more preferably 0.14 to 0.27 %.

The water absorption coefficient of an aromatic polycarbonate is a value obtained by measuring the moisture content of a disk-like specimen having a diameter of 45 mm and a thickness of 3.0 mm after the specimen is immersed in 23˚C water for 24 hours in accordance with IS062-1980. Tg (glass transition temperature) is a value measured with a differential scanning calorimeter (DSC) in accordance with JIS K7121.

The carbonate precursor is a carbonyl halide, carbonic acid diester or haloformate, as exemplified by phosgene, diphenyl carbonates and dihaloformates of a diphenol.

For the production of the aromatic polycarbonate resin from a diphenol and a carbonate precursor by interfacial polymerization method, a catalyst, a terminal capping agent and an antioxidant for preventing the oxidation of the diphenol may be optionally used. The aromatic polycarbonate resin includes a branched polycarbonate resin obtained by copolymerizing a polyfunctional aromatic compound having 3 or more functional groups, a polyester carbonate resin obtained by copolymerizing an aromatic or aliphatic (including alicyclic) bifunctional carboxylic acid, a copolycarbonate resin obtained by copolymerizing a bifunctional alcohol (including an alicyclic bifunctional alcohol) and a polyester carbonate resin obtained by copolymerizing the bifunctional carboxylic acid and the bifunctional alcohol. It may be a mixture of two or more of the obtained aromatic polycarbonate resins.

The branched polycarbonate resin can further improve the dripping preventing capability of the resin composition of the present invention. Examples of the polyfunctional aromatic compound having 3 or more functional groups used in the branched polycarbonate resin include phloroglucin, phloroglucide, triphenols such as 4,6-dimethyl-2,4,6-tris(4-hydroxydiphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol and 4-{4-[1,1-bis(4-hydroxyphenyl)ethyl]benzene}-α,α-dimethylbenzylphenol, and tetra(4-hydroxyphenyl)methane, bis(2,4-dihydroxyphenyl)ketone, 1,4-bis(4,4-dihydroxytriphenylmethyl)benzene, and trimellitic acid, pyromellitic acid, benzophenone tetracarboxylic acid and acid chlorides thereof. Out of these, 1,1,1-tris(4-hydroxyphenyl)ethane and 1,1,1-tris(3,5-dimethyl-4-hydroxyphenyl)ethane are preferred, and 1,1,1-tris(4-hydroxyphenyl)ethane is particularly preferred.

The constituent unit derived from the polyfunctional aromatic compound in the branched polycarbonate accounts for 0.01 to 1 mol%, preferably 0.05 to 0.9 mol%, particularly preferably 0.05 to 0.8 mol% based on 100 mol% of the total of the constituent unit derived from the diphenol and the constituent unit derived from the polyfunctional aromatic compound.

Particularly in the case of melt transesterification method, a branched structural unit may be produced as a by-product. The amount of this branched structural unit is 0.001 to 1 mol%, preferably 0.005 to 0.9 mol%, particularly preferably 0.01 to 0.8 mol% based on 100 mol% of the total of the constituent unit derived from the diphenol. The amount of the branched structure can be calculated by $^{1}$H-NMR measurement.

The aliphatic bifunctional carboxylic acid is preferably α,ω-dicarboxylic acid. Preferred examples of the aliphatic bifunctional carboxylic acid include linear saturated aliphatic dicarboxylic acids such as sebacic acid (decanedioic acid), dodecanedioic acid, tetradecanedioic acid, octadecanedioic acid and eicosanedioic acid and alicyclic dicarboxylic acids such as cyclohexanedicarboxylic acid. The bifunctional alcohol is preferably an alicyclic diol such as cyclohexanedimethanol, cyclohexanediol or tricyclodecanedimethanol.

A polycarbonate-polyorganosiloxane copolymer obtained by copolymerizing a polyorganosiloxane unit may also be used.

The interfacial polymerization reaction is a reaction between a diphenol and phosgene which is carried out in the presence of an acid binder and an organic solvent. The acid binder is selected from an alkali metal hydroxide such as sodium hydroxide or potassium hydroxide and pyridine.

The organic solvent is a halogenated hydrocarbon such as methylene chloride or chlorobenzene.

To promote the reaction, a catalyst such as a tertiary amine or quaternary ammonium salt may be used, and a monofunctional phenol such as phenol, p-tert-butylphenol or p-cumylphenol is preferably used as a molecular weight controller. Other monofunctional phenols such as decylphenol, dodecylphenol, tetradecylphenol, hexadecylphenol, octadecylphenol, eicosylphenol, docosylphenol and triacontylphenol may also be used. These monofunctional phenols having a relatively long-chain alkyl group are effective when fluidity and resistance to hydrolysis must be improved.

The reaction temperature is generally 0 to 40˚C, the reaction time is several minutes to 5 hours, and pH during the reaction is preferably maintained at 10 or more.

The melt transesterification reaction is generally a transesterification reaction between a diphenol and a carbonic acid diester. That is, the diphenol and the carbonic acid diester are mixed together in the presence of an inert gas to be reacted with each other under reduced pressure at 120 to 350˚C. The pressure is changed stepwise and the formed phenol is removed to the outside of the system by setting the pressure to 133 Pa or less in the end. The reaction time is generally 1 to 4 hours.

Examples of the carbonic acid diester include diphenyl carbonate, dinaphthyl carbonate, bis(diphenyl)carbonate, dimethyl carbonate, diethyl carbonate and dibutyl carbonate, out of which diphenyl carbonate is particularly preferred.

A polymerization catalyst may be used to accelerate the polymerization rate. Examples of the polymerization catalyst include hydroxides of alkali metals and alkali earth metals such as sodium hydroxide and potassium hydroxide, hydroxides of boron and aluminum, alkali metal salts and alkali earth metal salts, quaternary ammonium salts, alkoxides of alkali metals and alkali earth metals, organic acid salts of alkali metals and alkali earth metals, zinc compounds, boron compounds, silicon compounds, germanium compounds, organic tin compounds, lead compounds, antimony compounds, manganese compounds, titanium compounds and zirconium compounds all of which are used for an esterification reaction and a transesterification reaction. The above catalysts may be used alone or in combination of two or more. The amount of the polymerization catalyst is preferably $1 \times 10^{-9}$ to $1 \times 10^{-5}$ equivalent, more preferably $1 \times 10^{-8}$ to $5 \times 10^{-6}$ equivalent based on 1 mol of the raw material diphenol.

To reduce the number of the phenolic terminal groups in the melt transesterification reaction, a compound such as 2-chlorophenylphenyl carbonate, 2-methoxycarbonylphenylphenyl carbonate or 2-ethoxycarbonylphenylphenyl carbonate may be added in the latter stage or after the end of the polycondensation reaction.

In the melt transesterification method, a deactivator for neutralizing the activity of the catalyst is preferably used. The amount of the deactivator is preferably 0.5 to 50 mols based on 1 mol of the residual catalyst. The deactivator is used in an amount of preferably 0.01 to 500 ppm, more preferably 0.01 to 300 ppm, particularly preferably 0.01 to 100 ppm based on the aromatic polycarbonate resin after polymerization. Preferred examples of the deactivator include phosphonium salts such as tetrabutylphosphonium dodecylbenzenesulfonate and ammonium salts such as tetraethylammonium dodecylbenzylsulfate.

Details of reactions other than the above are well known by documents and patent publications.

Not only a virgin raw material but also a polycarbonate resin regenerated from a used product, so-called "material recycled aromatic polycarbonate resin" may be used as the aromatic polycarbonate resin which is the component A of the present invention. Preferred examples of the used product include glazing materials typified by sound insulating walls, glass windows, translucent roof materials and car sunroofs, transparent members such as windscreens and car head lamp lenses, containers such as water bottles and optical recording media. Since they do not contain large amounts of additives and other resins, target quality is easily obtained stably. Car head lamp lenses and optical recording media are particularly preferred because they satisfy the more preferred requirement for the above viscosity average molecular weight. The term "virgin raw material" means a raw material which is not used in the market after production.

The viscosity average molecular weight (M) of the aromatic polycarbonate resin is not particularly limited but preferably 10, 000 to 30, 000, more preferably 14, 000 to 20, 000, much more preferably 15,500 to 17,500.

An aromatic polycarbonate resin having a viscosity average molecular weight of less than 10,000 may not obtain practical levels of impact resistance and snap fittability and satisfactory dripping preventing capability. Therefore, it is apt to be inferior in flame retardancy. A resin composition obtained from an aromatic polycarbonate resin having a viscosity average molecular weight of more than 30,000 is inferior in fluidity at the time of injection molding. The heat stability of the resin composition is readily lowered as the molding temperature becomes higher.

The aromatic polycarbonate resin may be a mixture of the above aromatic polycarbonate resin and an aromatic polycarbonate resin having a viscosity average molecular weight outside the above range. For example, a polycarbonate resin having a viscosity average molecular weight higher than the above range, particularly 50,000 or more, preferably 100,000 or more has high entropy elasticity. As a result, it exhibits excellent moldability in gas assist molding, injection

press molding and foam molding. The improvement of moldability is better than that of the above branched polycarbonate.

The viscosity average molecular weight M in the present invention is calculated based on the following equation from the specific viscosity ($\eta_{sp}$) of a solution containing 0.7 g of an aromatic polycarbonate dissolved in 100 ml of methylene chloride at 20°C which is obtained with an Ostwald viscometer based on the following equation.

$$\text{Specific viscosity } (\eta_{sp}) = (t - t_0)/t_0$$

[$t_0$ is a time (seconds) required for the dropping of methylene chloride and t is a time (seconds) required for the dropping of a sample solution]

$$\eta_{sp}/c = [\eta] + 0.45 \times [\eta]^2 c$$

([η] represents an intrinsic viscosity)

$$[\eta] = 1.23 \times 10^{-4} M^{0.83}$$

c = 0.7

The calculation of the viscosity average molecular weight of the resin composition of the present invention is carried out as follows. That is, the resin composition is mixed with methylene chloride in a weight ratio of 1:20 to 1:30 to dissolve soluble matter contained in the resin composition. The soluble matter is collected by cerite filtration. Thereafter, the solvent contained in the obtained solution is removed. The solid after the removal of the solvent is fully dried to obtain a solid component soluble in methylene chloride. 0.7 g of the solid is dissolved in 100 ml of methylene chloride to measure the specific viscosity (ηsp) of the obtained solution at 20°C so as to calculate its viscosity average molecular weight M in the same manner as described above.

(component B: lamellar silicate mineral)

The component B is at least one lamellar silicate mineral selected from the group consisting of talc having an average particle diameter measured by the X-ray transmission method of 0.5 to 9 μm (component B-1) and muscovite mica having an average particle diameter measured by the laser diffraction/scattering method of 0.5 to 50 μm (component B-2).

(component B-1: talc)

Chemically, talc is hydrous magnesium silicate which is generally represented by a chemical formula $4SiO_2 \cdot 3MgO \cdot 2H_2O$ and flaky particles having a layer structure. It comprises 56 to 65 wt% of $SiO_2$, 28 to 35 wt% of MgO and about 5 wt% of $H_2O$. As other trace components, it contains 0.03 to 1.2 wt% of $Fe_2O_3$, 0.05 to 1.5 wt% of $Al_2O_3$, 0.05 to 1.2 wt% of CaO, 0.2 wt% or less of $K_2O$ and 0.2 wt% or less of $Na_2O$. As standard composition, it comprises 62.5 wt% of $SiO_2$, 31.5 wt% of MgO, 0.13 wt% of $Fe_2O_3$, 0.2 wt% of $Al_2O_3$ and 0.07 wt% of CaO and has an ignition loss of 4.5 wt%.

The average particle diameter of talc as the component B-1 is 0.5 to 9 μm, preferably 0.5 to 4 μm, more preferably 0.5 to 3.5 μm. It can be said that as the particle diameter becomes smaller, a bad influence upon the display of an image of FPD decreases. However, when the average particle diameter is smaller than 0.5 μm, a reduction in the bad influence becomes saturated and the cost rises with the result that general-applicability is lost.

Further, compressed talc having a bulk density of 0.4 g/cm$^3$ or more, preferably 0. 5 g/cm$^3$ or more is advantageously used as a raw material. The upper limit of bulk density of talc is preferably set to 1.0 g/cm$^3$ so as to achieve both handling ease and low processing cost.

The average particle diameter of talc in the present invention is called "D50" (median diameter of a particle size distribution) measured by an X-ray transmission method which is one of liquid-phase sedimentation methods. An example of the instrument for measuring the average particle diameter is the Sedigraph5100 of Micromeritics Co., Ltd.

The method of manufacturing talc from an ore by grinding is not particularly limited, and axial milling, annular milling, roll milling, ball milling, jet milling and container rotary compression shear milling may be employed. Talc which

has been classified by a classifier to be uniform in particle size after grinding is preferred. The classifier is not particularly limited, and impactor type inertia force classifiers (such as variable impactor), Coanda effect-use inertia force classifiers (such as elbow jet) and centrifugal classifiers (such as multi-stage cyclone, microplex, dispersion separator, acucut, turbo classifier, turboplex, micron separator and super separator) may be employed. Talc may be the ground product of a natural mineral or synthesized artificial talc.

Further, talc in an agglomerated state is preferred from the viewpoint of handling ease. To manufacture talc in the agglomerated state, a method in which deaeration compression is used and a method in which a greige agent is used for compression are employed. The method making use of deaeration compression is particularly preferred because it is simple and the unwanted greige agent is not mixed into the resin composition.

(component B-2: muscovite mica)

The average particle diameter of muscovite mica as the component B-2 is 0.5 to 50 μm, preferably 1 to 30 μm. The average particle diameter is an average particle diameter (D50 (median diameter of a particle size distribution)) measured by the laser diffraction/scattering method. The laser diffraction/scattering system particle size distribution measuring instrument of Horiba Mfg. Co., Ltd. can be used for the measurement. When the average particle diameter of mica is larger than 50 μm, mica coming up to the surface of a molded product is existent in large quantities and readily falls off.

Muscovite mica having a thickness actually measured by observing through an electron microscope of 0.01 to 1 μm may be used. The thickness is preferably 0.03 to 0.3 μm. The aspect ratio of muscovite mica is 5 to 200, preferably 10 to 100. The Mohs hardness of muscovite mica is preferably about 3. Muscovite mica can achieve higher stiffness and higher strength than other mica such as phlogopite, thereby attaining the object of the present invention at a higher level. Since muscovite mica is excellent in color, even when part of the FPD fixing frame is exposed to the outside, it can be colored various colors advantageously. Muscovite mica may be the ground product of a natural mineral or synthesized mica.

Muscovite mica is manufactured by either one of a dry grinding method and a wet grinding method. Although the dry grinding method is inexpensive and commonly used, the wet grinding method is effective in grinding muscovite mica thinly and finely (the effect of improving the stiffness of the resin composition becomes greater).

The lamellar silicate mineral as the component B may be surface treated with a surface treating agent such as a compound used as the component E, silane coupling agent, higher fatty acid ester or wax. Talc is more advantageous as the component B in the effect of reducing foreign matter whereas mica is advantageous from the viewpoint of stiffness. In consideration of these, one of the lamellar silicate minerals is selected, or a mixture thereof may be used.

Preferably, the resin composition in the present invention contains both talc having an average particle diameter measured by the X-ray transmission method of 0.5 to 9 μm (component B-1) and muscovite mica having an average particle diameter measured by the laser diffraction/scattering method of 0.5 to 50 μm (component B-2) as the component B.

(component C: fluorine-containing dripping preventing agent)

The fluorine-containing dripping preventing agent as the component C is a fluorine-containing polymer having fibril formability. Examples of the polymer include polytetrafluoroethylene, tetrafluoroethylene-based copolymer (such as tetrafluoroethylene-hexafluoropropylene copolymer), partially fluorinated polymer as disclosed by US Patent No. 4379910, and polycarbonate resin manufactured from a fluorinated diphenol. Polytetrafluoroethylene(may be abbreviated as PTFE hereinafter) is preferred.

Polytetrafluoroethylene having fibril formability (fibrillated PTFE) has an extremely high molecular weight, and PTFE' s are bonded together by an external function such as shear force to become fibrous. Since the number average molecular weight of the fibrillated PTFE is 1,500,000 to several tens of million. The lower limit of number average molecular weight is preferably 3,000,000. The number average molecular weight is calculated based on the melt viscosity of polytetrafluoroethylene at 380°C as disclosed by JP-A 6-145520. That is, the fibrillated PTFE has a melt viscosity of $10^7$ to $10^{13}$ poise, preferably $10^8$ to $10^{12}$ poise at 380°C measured by the method disclosed by the above publication.

PTFE in a solid form or aqueous dispersion form may also be used. A mixture of PTFE having fibril formability and another resin may also be used to improve dispersibility in a resin and obtain higher flame retardancy and mechanical properties. As disclosed by JP-A 6-145520, PTFE having a structure that its core is made of the fibrillated PTFE and its shell is made of polytetrafluoroethylene having a low molecular weight is also preferably used.

Commercially available products of the fibrillated PTFE include the Teflon (registered trademark) 6J of Mitsui·DuPont Fluorochemical Co., Ltd. and the Polyflon MPA FA500 and F-201L of Daikin Industries, Ltd. Commercially available products of an aqueous dispersion of the fibrillated PTFE include the Fluon AD-1 and AD-936 of Asahi ICI Fluoropolymers Co. , Ltd. , the Fluon D-1 and D-2 of Daikin Industries, Ltd. and the Teflon (registered trademark) 30J

of Mitsui·DuPont Fluorochemical Co., Ltd.

A mixture of the fibrillated PTFE obtained by the following methods may be used: (1) one in which an aqueous dispersion of the fibrillated PTFE and an aqueous dispersion or solution of an organic polymer are mixed together to carry out co-precipitation so as to obtain a co-agglomerated mixture (method disclosed by JP-A 60-258263, JP-A 63-154744, etc.), (2) one in which an aqueous dispersion of the fibrillated PTFE and dried organic polymer particles are mixed together (method disclosed by JP-A 4-272957), (3) one in which an aqueous dispersion of the fibrillated PTFE and a solution of organic polymer particles are uniformly mixed together and media are removed from the resulting mixture at the same time (method disclosed by JP-A 06-220210, JP-A 08-188653, etc.), (5) one in which a monomer for forming an organic polymer is polymerized in an aqueous dispersion of the fibrillated PTFE (method disclosed by JP-A 9-95583), and (5) one in which an aqueous dispersion of PTFE and a dispersion of an organic polymer are uniformly mixed together, a vinyl-based monomer is polymerized in the mixed dispersion and a mixture is obtained (method disclosed by JP-A 11-29679, etc.). Commercially available products of the mixture of the fibrillated PTFE include the Metabrene A3800 (trade name) of Mitsubishi Rayon Co., Ltd. and the BLENDEX B449 (trade name) of GE Specialty Chemicals Co., Ltd.

The amount of the fibrillated PTFE in the mixture is preferably 10 to 80 wt%, more preferably 15 to 75 wt% based on 100 wt% of the mixture. Within the above range, the high dispersibility of the fibrillated PTFE can be achieved.

(component D: alkali (earth) metal salt of organic sulfonic acid)

The alkali (earth) metal salt of an organic sulfonic acid as the component D is an organic compound having an alkali (earth) metal sulfonate group such as an alkali metal salt or alkali earth metal salt of a perfluoroalkylsulfonic acid, or an alkali metal salt or alkali earth metal salt of an aromatic sulfonic acid. An alkali metal salt of a perfluoroalkylsulfonic acid is particularly preferred. The metal salt is preferred because it exhibits high flame retardancy and can improve the color of a resin composition. When it is used in combination with talc, it shows the effect of improving color.

Examples of the alkali metal of the component D include lithium, sodium, potassium, rubidium and cesium, and examples of the alkali earth metal include beryllium, magnesium, calcium, strontium and barium.. Alkali metals are more preferred. Out of the above alkali metals, rubidium and cesium are preferred when higher transparency is desired. However, as they are not generally applicable and are hardly purified, they may be disadvantageous from the economical point of view. Lithium and sodium are advantageous in terms of cost and flame retardancy but may be disadvantageous in terms of transparency. In consideration of these, an alkali metal in the alkali metal salt of a sulfonic acid can be selected. A potassium salt of an organic sulfonic acid is most preferred because it is excellent in balance between these properties. A potassium salt of a sulfonic acid and another alkali metal salt of a sulfonic acid may be used in combination.

Examples of the alkali metal salt of a perfluoroalkylsulfonic acid include potassium trifluoromethanesulfonate, potassium perfluorobutanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate and rubidium perfluorohexanesulfonate. They may be used alone or in combination of two or more. The number of carbon atoms of the perfluoroalkyl group is preferably 1 to 18, more preferably 1 to 10, much more preferably 1 to 8. Out of these, potassium perfluorobutanesulfonate is particularly preferred.

Not a small amount of a fluoride ion ($F^-$) is contained in the alkali (earth) metal salt of a perfluoroalkylsulfonic acid comprising an alkali metal. Since the existence of the fluoride ion may deteriorate flame retardancy, it is preferably reduced as much as possible. The content of the fluoride ion can be measured by ion chromatography. The content of the fluoride ion is preferably 100 ppm or less, more preferably 40 ppm or less, particularly preferably 10 ppm or less. It is preferably 0.2 ppm or more from the viewpoint of production efficiency.

Preferred methods for manufacturing an alkali (earth) metal salt of a perfluoroalkylsulfonic acid which has a reduced content of the fluoride ion include (i) one in which the amount of the fluoride ion contained in the raw materials for manufacturing the metal salt is reduced, (ii) one in which hydrogen fluoride obtained by the reaction is removed by gas generated at the time of the reaction or heating, and (iii) one in which the content of the fluoride ion in the compound is reduced by purification such as recrystallization or re-precipitation in the manufacture of the metal salt. Since the alkali (earth) metal salt of a perfluoroalkylsulfonic acid is relatively soluble in water, a manufacturing method in which ion exchange water, especially water having an electric resistance of 18 MΩ·cm or more, that is, an electric conductivity of about 0.55 μS/cm or less is used to dissolve the alkali (earth) metal salt of a perfluoroalkylsulfonic acid at a temperature higher than normal temperature and the alkali (earth) metal salt is washed and cooled to be recrystallized is particularly preferred to manufacture an alkali (earth) metal salt of a perfluoroalkylsulfonic acid having a reduced content of the fluoride ion.

Examples of the alkali (earth) metal salt of an aromatic sulfonic acid include disodium diphenylsulfide-4,4'-disulfonate, dipotassium diphenylsulfide-4,4'-disulfonate, potassium 5-sulfoisophthalate, sodium 5-sulfoisophthalate,

polysodium polyethylene terephthalate polysulfonate, calcium 1-methoxynaphthalene-4-sulfonate, disodium 4-dodecylphenylether disulfonate, polysodium poly(2,6-dimethylphenyleneoxide)polysulfonate, polysodium poly(1,3-phenyleneoxide)polysulfonate, polysodium poly(1,4-phenyleneoxide)polysulfonate, polypotassium poly(2,6-diphenylphenyleneoxide)polysulfonate, lithium poly(2-fluoro-6-butylphenyleneoxide)polysulfonate, potassium sulfonate of benzene sulfonate, sodium benzenesulfonate, strontium benzenesulfonate, magnesium benzenesulfonate, dipotassium p-benzenesulfonate, dipotassium naphthalene-2,6-disulfonate, calcium biphenyl-3,3'-disulfonate, sodium diphenylsulfone-3-sulfonate, potassium diphenylsulfone-3-sulfonate, dipotassium diphenylsulfone-3,3'-disulfonate, dipotassium diphenylsulfone-3,4'-disulfonate, sodium $\alpha,\alpha,\alpha$-trifluoroacetophenone-4-sulfonate, dipotassium benzophenone-3,3'-disulfonate, disodium thiophene-2,5-disulfonate, dipotassium thiophene-2,5-disulfonate, calcium thiophene-2,5-disulfonate, sodium benzothiophenesulfonate, potassium diphenylsulfoxide-4-sulfonate, formalin condensates of sodium naphthalenesulfonate and formalin condensates of sodium anthracenesulfonate. Out of these alkali (earth) metal salts of an aromatic sulfonic acid, potassium salts are particularly preferred.

(component E)

The component B tends to lower the heat stability of the aromatic polycarbonate resin (component A). Therefore, the resin composition of the present invention preferably contains a heat stability improving agent. With this compound, the resin composition of the present invention becomes a resin material suitable for use in an FPD fixing frame, particularly a large-sized FPD fixing frame. That is, the fall-off probability of a filler is reduced surely because a good appearance is maintained. Since the resin composition can be adapted to broad molding conditions, unnatural filling conditions are eliminated and the warp of an FPD fixing frame is reduced more.

A coating type heat stability improving agent is preferred. When the coating type heat stability improving agent covers the surface of the lamellar silicate mineral, it reduces reactivity between the mineral and the aromatic polycarbonate resin, thereby improving heat stability due to no reactivity between the surface covered component and the aromatic polycarbonate resin.

Examples of the heat stability improving agent include (i) a lubricant containing a functional group having reactivity with the silicate mineral and (ii) a lubricant whose surface is covered with the silicate mineral. Therefore, surface treating agents having a lubricating effect out of the above surface treating agents for the silicate mineral serve as the coating type heat stability improving agent. A preferred coating type heat stability improving agent is at least one compound (component E) selected from the group consisting of an acid group-containing lubricant, alkylalkoxysilane and alkylhydrogenosilane. The component E is preferably contained in an amount of 0.01 to 5 parts.by weight based on 100 parts by weight of the component A.

The number of carbon atoms of the alkyl group in the alkylalkoxysilane and alkylhydrogenosilane is preferably 4 or more. The number of carbon atoms of the alkyl group is preferably 60 or less, more preferably 20 or less, muchmore preferably 18 or less, particularly preferably 16 or less. Although the effect of the lubricant becomes greater as the number of carbon atoms of the alkyl group increases, heat stability lowers. The number of the alkyl groups in these silane compounds is preferably 1 or 2, particularly preferably 1. Preferred examples of the alkoxy group in the alkylalkoxysilane include methoxy group and ethoxy group.

Examples of the acid group in the acid group-containing lubricant include carboxyl group, carboxylic anhydride group, sulfonic acid group, sulfinic acid group, phosphonic acid group and phosphinic acid group. The preferred acid group is at least one selected from carboxyl group, carboxylic anhydride group, sulfonic acid group, sulfinic acid group, phosphonic acid group and phosphinic acid group. A lubricant having at least one acid group selected from carboxyl group, carboxylic anhydride group and phosphonic acid group is preferred, and a lubricant having a carboxyl group and/or a carboxylic anhydride group (to be referred to as "carboxyl groups" hereinafter) is particularly preferred. The concentration of the acid group in the acid group-containing lubricant is preferably 0.05 to 10 meq/g, more preferably 0.1 to 6 meq/g, much more preferably 0.5 to 4 meq/g.

The lubricant is a compound which is widely known and used to reduce friction between an apparatus and a metal mold and obtain high releasability in the molding of a plastic, as exemplified by olefin-based waxes, higher fatty acids (for example, aliphatic carboxylic acids having 16 to 60 carbon atoms), polyalkylene glycols having a polymerization degree of about 10 to 200, silicone oil and fluorocarbon oil. The olefin-based waxes include paraffin waxes such as paraffin wax, microcrystalline wax and Fischer-Tropsch wax, $\alpha$-olefin polymers, and polyethylene waxes such as polyethylene and polypropylene having a molecular weight of about 1,000 to 15,000. The molecular weight is a weight average molecular weight calculated based on a calibration curve obtained from standard polystyrene by GPC (gel permeation chromatography).

To bond the acid group to the lubricant (excluding higher fatty acids), (a) a method in which a monomer having the acid group and an $\alpha$-olefin monomer are copolymerized and (b) a method in which a compound or monomer having the acid group is bonded to or copolymerized with the above lubricant are employed.

In the method (a), radical polymerization method such as solution polymerization, emulsion polymerization,

suspension polymerization or bulk polymerization, or living polymerization method may be employed. Further, a method in which a macromonomer is formed and then polymerized may also be employed. The copolymer may be used as various type such as a random copolymer, alternant copolymer, block copolymer or tapered copolymer. In the above method (b), a radical generator such as a peroxide or 2,3-dimethyl-2,3-diphenylbutane (generally called "dicumyl") is optionally added to a lubricant, especially an olefin-based wax to carry out a reaction or copolymerization at a high temperature. In this method, a reaction active site is thermally formed in the lubricant to make the compound or monomer reactive at the active site reacted. As alternative means for forming an active site required for the reaction, the application of radiation or electron beam and application of external force by mechanochemical means may be adopted. Further, a method in which a monomer for forming an active site required for the reaction is copolymerized into the lubricant may also be used. Examples of the active site for the reaction include an unsaturated bond, peroxide bond and nitro oxide radical which has high steric hindrance and is thermally stable.

Examples of the compound or monomer having carboxyl groups include acrylic acid, methacrylic acid, maleic acid, fumaric acid, maleic anhydride and citraconic anhydride, out of which maleic anhydride is particularly preferred.

A carboxyl group-containing olefin-based wax is preferred as the acid group-containing lubricant. A carboxyl group-containing olefin-based wax containing carboxyl groups in an amount of preferably 0.05 to 10 meq/g, more preferably 0.1 to 6 meq/g, much more preferably 0.5 to 4 meq/g based on 1 g of the wax is preferred. The molecular weight of the olefin-based wax is preferably 1, 000 to 10, 000. A copolymer of an α-olefin and maleic anhydride which satisfies the above requirements for concentration and molecular weight is preferred. The copolymer can be manufactured by melt polymerization or bulk polymerization in the presence of a radical catalyst in accordance with a commonly used method. The number of carbon atoms of the α-olefin is preferably 10 to 60, more preferably 16 to 60, much more preferably 25 to 55 as the mean value.

(amount of each component)

A description is subsequently given of the amounts of the components B to E. The amount of the lamellar silicate mineral (component B) is 1 to 30 parts by weight, preferably 1 to 25 parts by weight, more preferably 1 to 20 parts by weight based on 100 parts by weight of the aromatic polycarbonate resin (component A). When the amount of the component B is smaller than 1 part by weight, the stiffness of the resin composition becomes unsatisfactory and when the amount is larger than 30 parts by weight, impact strength lowers which makes the resin composition unsuitable for use in an FPD fixing frame.

The amount of the fluorine-containing dripping preventing agent (component C) is 0.01 to 0.6 part by weight, preferably 0.1 to 0.6 part by weight based on 100 parts by weight of the component A. When the amount of the component C is smaller than 0.01 part by weight, its capability of preventing melt dripping at the time of combustion becomes unsatisfactory, thereby making it difficult to obtain the effect of adding the component C. When the amount is larger than 0.6 part by weight, the impact strength is reduced and the surface of a molded product becomes rough due to a reduction in a dispersion failure.

The amount of the alkali (earth) metal salt of an organic sulfonic acid (component D) is 0.001 to 1.0 part by weight, preferably 0.003 to 0.3 part by weight, more preferably 0.005 to 0.15 part by weight based on 100 parts by weight of the component A. When the amount of the component D is smaller than 0.001 part by weight, the improvement of the flame retardancy of the resin composition becomes unsatisfactory, thereby making it difficult to obtain the effect of adding the component D. When the amount is larger than 1.0 part by weight, moist heat resistance deteriorates disadvantageously.

The amount of at least one compound (component E) selected from an acid group-containing lubricant, alkylalkoxysilane and alkylhydrogenosilane is preferably 0.01 to 5 parts by weight based on 100 parts by weight of the component A. The more preferred amount of each compound is as follows. The amounts of the alkylalkoxysilane and alkylhydrogenosilane are more preferably 0.1 to 3 parts by weight, much more preferably 0.2 to 1.5 parts by weight based on 100 parts by weight of the component A. The amount of the acid group-containing lubricant, especially carboxyl group-containing olefin-based wax is more preferably 0.05 to 1.5 parts by weight, much more preferably 0.1 to 1 part by weight, particularly preferably 0.2 to 0.8 part by weight based on 100 parts by weight of the component A. When the amount of the component E is within the above range, it is effective in improving heat stability, toughness, releasability and stiffness.

(other additives)

The resin composition of the present invention may contain various additives which are generally contained in an aromatic polycarbonate resin, besides the components A to E.

(I) flame retardant

The resin composition of the present invention may optionally contain a flame retardant other than the component D. Examples of the flame retardant include (i) organic phosphorus-based flame retardants (such as monophosphate compounds, phosphate oligomer compounds, phosphonate oligomer compounds, phosphonitrile oligomer compounds and phosphonic acid amide compounds), and (ii) silicone-based flame retardants composed of silicone compounds.

Phosphate compounds are preferred as the organic phosphorus-based flame retardant. The phosphate compounds are advantages because they improve not only the flame retardancy but also the fluidity of the resin composition. Therefore, they are advantageous to a large-sized FPD fixing frame. However, as phosphate compounds are disadvantageous in terms of an environmental load and a reduction in heat resistance as described above, they must be used in consideration of these.

One or more phosphate compounds represented by the following formula (i) are used as the flame retardant in the present invention.

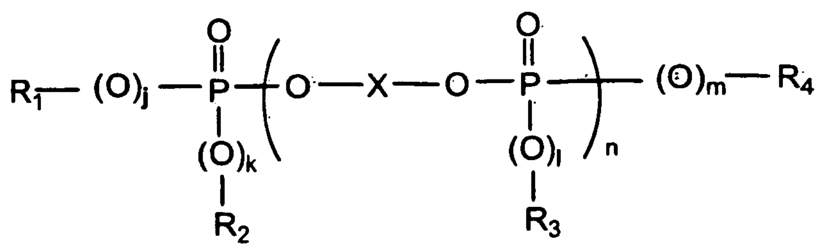

(i)

X in the above formula is a divalent organic group derived from a diphenol, $R_1$, $R_2$, $R_3$ and $R_4$ are each a monovalent organic group derived from a monophenol, and j, k, 1, m and n are each an integer of 0 to 5.

The phosphate compound of the above formula does not contain a chemically bonded chlorine atom and bromine atom. The phosphate compound of the above formula may be a mixture of compounds which differ in n. In the case of a mixture, the average number represented by n is preferably 0.5 to 1.5, more preferably 0.8 to 1.2, much more preferably 0.95 to 1.15, particularly preferably 1 to 1.14.

Preferred examples of the diphenol from which the above X is derived include hydroquinone, resorcinol, bis (4-hydroxydiphenyl)methane, bisphenol A, dihydroxydiphenyl, dihydroxynaphthalene, bis(4-hydroxyphenyl)sulfone, bis (4-hydroxyphenyl)ketone and bis (4-hydroxyphenyl) sulfide. Out of these, resorcinol, bisphenol A and dihydroxydiphenyl are preferred.

Preferred examples of the monophenol from which $R_1$, $R_2$, $R_3$ and $R_4$ are derived include phenol, cresol, xylenol, isopropylphenol, butylphenol and p-cumylphenol. Out of these, phenol and 2,6-dimethylphenol are preferred.

Preferred examples of the phosphate compound include monophosphate compounds such as triphenyl phosphate and tri(2,6-xylyl)phosphate, phosphate oligomers mainly composed of resorcinol bisdi(2,6-xylyl)phosphate, phosphate oligomers mainly composed of 4,4-dihydroxydiphenylbis(diphenylphosphate) and phosphate oligomers mainly composed of bisphenol A bis (diphenylphosphate) (the expression "mainly composed of" means that another component having a different degree of polymerization may be contained in a small amount, more preferably a component of the above formula (i) in which n = 1 is contained in an amount of 80 wt% or more, preferably 85 wt% or more, more preferably 90 wt% or more).

However, the more preferred resin composition does not contain a phosphate compound, especially a compound represented by the above general formula (i) as a flame retardant.

The silicone-based compound as the flame retardant in the present invention contains an aryl group to improve flame retardancy by a chemical reaction at the time of combustion. As the compound may be used various compounds which have been proposed as flame retardants for aromatic polycarbonate resins. It is considered that the silicone compound provides a flame retarding effect to a polycarbonate resin due to the formation of a structure by bonding itself or bonding to a component derived from the resin at the time of combustion or to a reduction reaction at the time of forming the structure. Therefore, it is preferred that the compound should have a highly active group for the reaction, more specifically a predetermined amount of at least one group selected from an alkoxy group and hydrogen (that is, Si-H group). The content of the group (alkoxy group or Si-H group) is 0.1 to 1.2 mol/100 g, more preferably 0.12 to 1 mol/100 g, much more preferably 0.15 to 0.6 mol/100 g. This content is obtained by measuring the amount of hydrogen or alcohol formed per unit weight of the silicon compound by an alkali decomposition method. The alkoxy group is preferably an alkoxy group having 1 to 4 carbon atoms, particularly preferably methoxy group.

In general, the structure of the silicone compound is constituted by combining the following four siloxane units

arbitrarily.
M unit: monofunctional siloxane unit such as $(CH_3)_3SiO_{1/2}$, $H(CH_3)_2SiO_{1/2}$, $H_2(CH_3)SiO_{1/2}$, $(CH_3)_2(CH_2=CH)SiO_{1/2}$, $(CH_3)_2(C_6H_5)SiO_{1/2}$ or $(CH_3)(C_6H_5)$ $(CH_2=CH)SiO_{1/2}$
D unit: bifunctional siloxane unit such as $(CH_3)_2SiO$, $H(CH_3)SiO$, $H_2SiO$, $H(C_6H_5)SiO$, $(CH_3)(CH_2=CH)SiO$ or $(C_6H_5)_2SiO$
T unit: trifunctional siloxane unit such as $(CH_3)SiO_{3/2}$, $(C_3H_7)SiO_{3/2}$, $HSiO_{3/2}$, $(CH_2=CH)SiO_{3/2}$ or $(C_6H_5)SiO_{3/2}$
Q unit: tetrafunctional siloxane unit represented by $SiO_2$

The structure of the silicone compound as the component E-2 of the present invention is represented by $D_n$, $T_p$, $M_mD_n$, $M_mT_p$, $M_mQ_q$, $M_mD_nT_p$, $M_mD_nQ_q$, $M_mT_pQ_q$, $M_mD_nT_pQ_q$, $D_nT_p$, $D_nQ_q$ or $D_nT_pQ_q$. Out of these, the structure of the silicone compound is represented by preferably $M_mD_n$, $M_mT_p$, $M_mD_nT_p$ or $M_mD_nQ_q$, more preferably $M_mD_n$ or $M_mD_nT_p$.

The coefficients m, n, p and q in the above formulas are each an integer of 1 or more which indicates the degree of polymerization of each siloxane unit. The total of the above coefficients is the average degree of polymerization of the silicone compound. This average degree of polymerization is in the range of preferably 3 to 150, more preferably 3 to 80, much more preferably 3 to 60, particularly preferably 4 to 40. The flame retardancy becomes more excellent as the above average degree of polymerization becomes more preferred. As will be described hereinafter, the silicone compound containing a predetermined amount of an aromatic group is also excellent in transparency. When either one of m, n, p and q is 2 or more, the number of the siloxane units having the coefficient may be 2 or more which differ in the bonded hydrogen atom or organic residue.

Further, the silicone-based compound as the flame retardant may have a linear or branched structure. The organic residue bonded to the silicon atom includes at least an aryl group and the other organic residue has preferably 1 to 30, more preferably 1 to 20 carbon atoms. Examples of the organic residue include alkyl group, cycloalkyl group and aralkyl group.

When the silicone-based compound as the flame retardant contains an aryl group, an aromatic polycarbonate resin composition having flame retardancy and more excellent transparency and color is provided. The amount of the aromatic group represented by the following general formula (ii) is preferably 10 to 70 wt% (more preferably 15 to 60 wt%).

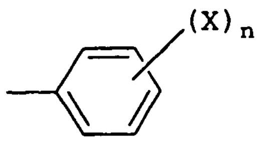

(ii)

In the formula (ii), X is an OH group or monovalent organic residue having 1 to 20 carbon atoms, and n is integer of 0 to 5, with the proviso that, when n is 2 or more, X's may be different from each other.

The silicone-based compound as the flame retardant of the present invention may contain a reactive group other than the above Si-H group and alkoxy group, and examples of the reactive group include amino group, carboxyl group, epoxy group, vinyl group, mercapto group and methacryloxy group.

As the silicone-based compound as the flame retardant, the silicone compound having an Si-H group preferably contains at least one of constituent units represented by the following general formulas (iii) and (iv).

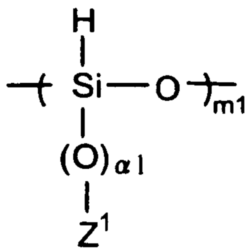

(iii)

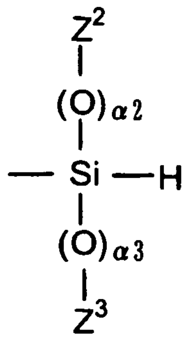

(iv)

In the formulas (iii) and (iv), $Z^1$ to $Z^3$ are each independently a hydrogen atom, monovalent organic residue having 1 to 20 carbon atoms, or a compound represented by the following general formula (v). α1 to α3 are each independently 0 or 1. m1 is an integer of 0, 1 or more. When m1 is 2 or more in the formula (iii), the recurring units may be different from each other.

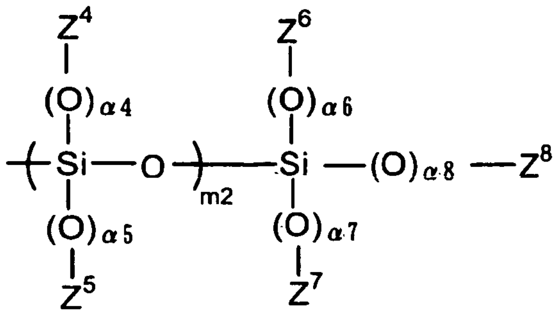

(v)

In the formula (v), $Z^4$ to $Z^8$ are each independently a hydrogen atom or monovalent organic residue having 1 to 20 carbon atoms. α4 to α8 are each independently 0 or 1. m2 is an integer of 0, 1 or more. When m2 is 2 or more in the formula (v), the recurring units may be different from each other.

As the silicone-based compound as the flame retardant, the silicone compound having an alkoxy group is at least one compound selected from compounds represented by the following general formulas (vi) and (vii).

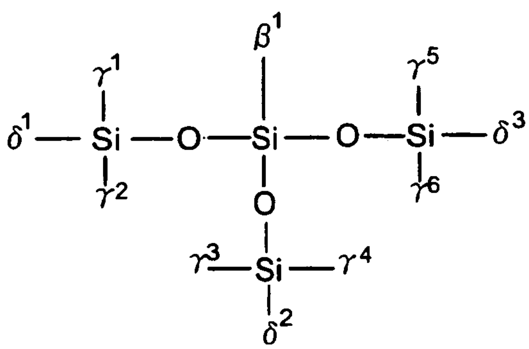

(vi)

In the formula (vi), $\beta^1$ is a vinyl group, alkyl group having 1 to 6 carbon atoms, cycloalkyl group having 3 to 6 carbon atoms, or aryl group or aralkyl group having 6 to 12 carbon atoms. $\gamma^1$, $\gamma^2$, $\gamma^3$, $\gamma^4$, $\gamma^5$ and $\gamma^6$ are each an alkyl group or cycloalkyl group having 1 to 6 carbon atoms, or aryl group or aralkyl group having 6 to 12 carbon atoms, with proviso that at least one of the groups is an aryl group or aralkyl group. $\delta^1$, $\delta^2$ and $\delta^3$ are each an alkoxy group having 1 to 4 carbon atoms.

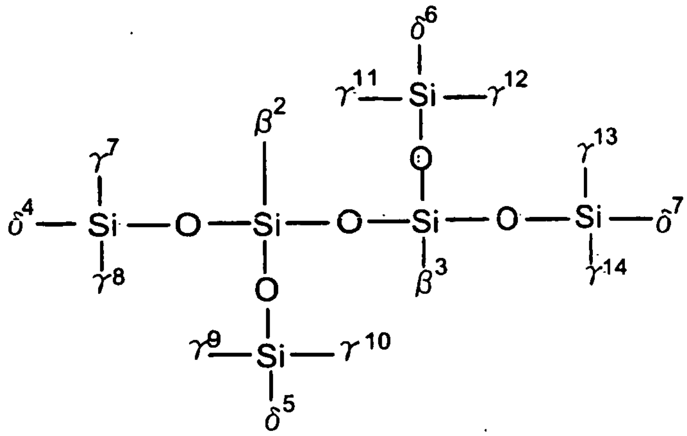

(vii)

In the formula (vii), $\beta^2$ and $\beta^3$ are each a vinyl group, alkyl group having 1 to 6 carbon atoms, cycloalkyl group having 3 to 6 carbon atoms, or aryl group or aralkyl group having 6 to 12 carbon atoms. $\gamma^7$, $\gamma^8$, $\gamma^9$, $\gamma^{10}$, $\gamma^{11}$, $\gamma^{12,}$ $\gamma^{13}$ and $\gamma^{14}$ are each an alkyl group having 1 to 6 carbon atoms, cycloalkyl group having 3 to 6 carbon atoms, or aryl group or aralkyl group having 6 to 12 carbon atoms, with proviso that at least one of the groups is an aryl group or aralkyl group. $\delta^4$, $\delta^{5,}$ $\delta^6$ and $\delta^7$ are each an alkoxy group having 1 to 4 carbon atoms.

The amount of the silicone-based compound as the flame retardant is preferably 0.1 to 10 parts by weight, more preferably 0.2 to 5 parts by weight, much more preferably 0.3 to 3 parts by weight based on 100 parts by weight of the component A.

(II) phosphorus-based stabilizer

Preferably, the resin composition of the present invention further contains a phosphorus-based stabilizer. The phosphorus-based stabilizer improves heat stability at the time of manufacture or molding and also improves mechanical properties, color and molding stability. Examples of the phosphorus-based stabilizer include phosphorous acid, phosphoric acid, phosphonous acid, phosphonic acid and esters thereof, and tertiary phosphines.

More specifically, phosphite compounds, phosphate compounds, phosphonite compounds, phosphonate compounds as disclosed by JP-A 2004-137472 may be used. Out of these, triphenyl phosphate and trimethyl phosphate are particularly preferred.

The tertiary phosphines include triethyl phosphine, tripropyl phosphine, tributyl phosphine, trioctyl phosphine, triamyl phosphine, dimethylphenyl phosphine, dibutylphenyl phosphine, diphenylmethyl phosphine, diphenyloctyl phosphine, triphenyl phosphine, tri-p-tolyl phosphine, trinaphthyl phosphine and diphenylbenzyl phosphine. Triphenyl phosphine is a particularly preferred tertiary phosphine.

The above phosphorus-based stabilizers may be used alone or in combination of two or more. Out of the above phosphorus-based stabilizers, alkylphosphate compounds typified by trimethyl phosphate are preferably used. A combination of an alkyl phosphate compound and a phosphite compound and/or a phosphonite compound is also preferred.

(III) hindered phenol-based stabilizer

The resin composition of the present invention may further contain a hindered phenol-based stabilizer. This provides the effect of suppressing the deterioration of color at the time of molding and after long-term use. Examples of the hindered phenol-based stabilizer include compounds disclosed by JP-A 2004-137472. All of them can be easily acquired. The above hindered phenol-based stabilizers may be used alone or in combination of two or more. Out of these, n-octadecyl-β-(4'-hydroxy-3',5'-di-tert-butylphenyl) propionate and tetrakis[methylene-3-(3',5'-di-tert-butyl-4-hydroxypheny l)propionate]methane are preferred.

The amounts of the phosphorus-based stabilizer and the hindered phenol-based stabilizer are each 0.0001 to 1 part by weight, preferably 0.001 to 0.5 part by weight, more preferably 0.005 to 0.3 part by weight based on 100 parts by weight of the aromatic polycarbonate resin (component A) . When the amount of the stabilizer falls below the above range, it is difficult to obtain a satisfactory stabilization effect and when the amount exceeds the above range, the physical properties of the composition may deteriorate.

(IV) heat stabilizer other than the above

The resin composition of the present invention may further contain a heat stabilizer other than the above phosphorus-based stabilizer and the above hindered phenol-based stabilizer. A preferred example of the other heat stabilizer is a lactone-based stabilizer typified by a reaction product between 3-hydroxy-5,7-di-tert-butyl-fran-2-one and o-xylene. Details of this stabilizer are described in JP-A 7-233160. This compound is commercially available under the trade name of Irganox HP-136 (trademark, manufactured by CIBA SPECIALTY CHEMICALS Co., Ltd.). Further, a stabilizer which is a mixture of the compound, a phosphite compound and a hindered phenol compound is available on the market. The Irganox HP-2921 manufactured by the above company is a preferred example of the above stabilizer. The amount of the lactone-based stabilizer is preferably 0.0005 to 0.05 part by weight, more preferably 0.001 to 0.03 part by weight based on 100 parts by weight of the component A.
Other stabilizers include phosphor-containing stabilizers such as pentaerythritol tetrakis(3-mercaptopropionate), pentaerythritol tetrakis(3-laurylthiopropionate) and glycerol-3-stearylthiopropionate. The amount of the phosphor-containing stabilizer is preferably 0.001 to 0.1 part by weight, more preferably 0.01 to 0.08 part by weight based on 100 parts by weight of the component A.

(V) ultraviolet light absorber

The resin composition of the present invention may contain an ultraviolet light absorber to provide light resistance.
The ultraviolet light absorber is selected from a benzophenone-based compound, a benzotriazole-based compound, a hydroxyphenyltriazine-based compound and a cyclic iminoester-based compound as disclosed by JP-A 2004-83850, for example. Out of these, 2-(2-hydroxy-5-methylphenyl)benzotriazole, 2-(2-hydroxy-3,5-dicumylphenyl) phenylbenzotriazole and 2,2'-methylenebis[4-(1,1,3,3-tetramethylbutyl)-6-(2H-benzotriazol-2-yl)phenol] are preferred.
Cyanoacrylate-based ultraviolet light absorbers include 1,3-bis-[(2'-cyano-3',3'-diphenylacryloyl)oxy]-2,2-bis[( 2-cyano-3,3-diphenylacryloyl)oxy]methyl)propane and 1,3-bis[(2-cyano-3,3-diphenylacryloyl)oxy]benzene.
Further, when the above ultraviolet light absorber has the structure of a monomer compound which can be radically polymerized, a polymer type ultraviolet light absorber obtained by copolymerizing the ultraviolet light absorbing monomer and/or an optically stable monomer with a monomer such as an alkyl (meth)acrylate may be used. The above ultraviolet absorbing monomer is preferably a compound containing a benzotriazole skeleton, benzophenone skeleton, triazine skeleton, cyclic iminoester skeleton or cyanoacrylate skeleton in the ester substituent of a (meth)acrylate.
Out of these, benzotriazole-based compounds and hydroxyphenyltriazine-based compounds are preferred from the viewpoint of ultraviolet light absorptivity, and cyclic iminoester-based compounds and cyanoacrylate-based compounds are preferred from the viewpoints of heat resistance and color. The above ultraviolet light absorbers may be used alone or in combination of two or more. The amount of the ultraviolet light absorber is 0.01 to 2 parts by weight, preferably 0.02 to 2 parts by weight, more preferably 0.03 to 1 part by weight, particularly preferably 0.05 to 0.5 part by weight based on 100 parts by weight of the aromatic polycarbonate resin (component A).

(VI) other resin and elastomer

The resin composition of the present invention may contain a small amount of other resin or an elastomer in place of part of the aromatic polycarbonate resin as the component A as long as the effect of the present invention is obtained. The amount of the other resin or elastomer is preferably 20 wt% or less, more preferably 10 wt% or less, much more preferably 5 wt% or less based on 100 wt% of the total of it and the component A.
Examples of the other resin include polyester resins such as polyethylene terephthalate and polybutylene terephthalate, polyamide resins, polyimide resins, polyether-imide resins, polyurethane resins, silicone resins, polyphenylene ether resins, polyphenylene sulfide resins, polysulfone resins, polyolefin resins such as polyethylene and polypropylene, polystyrene resins, acrylonitrile/styrene copolymer (AS resin), acrylonitrile/butadiene/styrene copolymer (ABS resin), polymethacrylate resins, phenol resins and epoxy resins.
Examples of the elastomer include isobutylene/isoprene rubber, styrene/butadiene rubber, ethylene/propylene rubber, acrylic elastomers, polyester-based elastomers, polyamide-based elastomers, MBS (methyl methacrylate/styrene/butadiene) rubber which is a core-shell type elastomer and MAS (methyl methacrylate/acrylonitrile/styrene) rubber.

(VII) components other than the above components

The resin composition of the present invention may contain small amounts of additives known per se to provide various functions or improve characteristic properties to its molded products. These additives are used in ordinary amounts as far as the object of the present invention is not impaired. The additives include a lubricant (such as PTFE

particles), colorant (pigment or dye such as carbon black or titanium oxide), light diffusing agent (such as acrylic crosslinked particles, silicone crosslinked particles or calcium carbonate particles), fluorescent dye, fluorescent brightener, optical stabilizer (typified by a hindered amine compound), inorganic phosphor (phosphor comprising an aluminate as mother crystal), antistatic agent, crystal nucleating agent, inorganic or organic anti-fungus agent, optical catalyst-based stain-proofing agent (such as titanium oxide fine particles or zinc oxide fine particles), release agent, fluidity modifier, radical generator, infrared light absorber (heat ray absorber) and photochromic agent.

The resin composition of the present invention achieves a V-0 rating in the UL 94 vertical burn test on a 1.5 mm-thick test specimen and does not contain a compound having a chemically bonded chlorine atom and bromine atom.

(manufacture of resin composition)

To manufacture the resin composition of the present invention, any process may be employed. For example, the components A to D and preferably the component E are supplied into a melt kneader typified by a vented double-screw extruder together with other optional components as required to be melt kneaded together. In general, a strand extruded from the dice of the extruder is let pass through a water tank to be cooled, and the cooled strand is cut by a pelletizer to obtain a pellet of the resin composition. Before supply into the extruder, the raw materials can be pre-mixed together. Examples of the pre-mixing means include a twin-cylinder mixer, Henschel mixer, mechanochemical device and extrusion mixer. The raw materials and a pre-mixture thereof may be granulated by an extrusion granulator or briquetting machine as required.

To supply these components into the melt kneader, (i) the components A to D and other components are independently supplied into the melt kneader, (ii) some of the components A to D and other components are pre-mixed together and supplied independently into the melt kneader together with the other components, (iii) some of the components are diluted and mixed with water or an organic solvent and supplied into the melt kneader, or (iv) the diluted mixture is pre-mixed with the other components and supplied into the melt kneader. When there is a liquid component to be mixed, a liquid injector or a liquid adder may be used to supply the liquid component into the melt kneader. When talc is used as the component B and solid PTFE is used as the component C, talc and the component C are pre-mixed together to improve their dispersibility.

The preferred extruder has a vent from which water contained in the raw materials and a volatile gas generated from the molten kneaded resin can be removed. A pressure reducing pump such as a vacuum pump is preferably installed in the vent. Thereby, the generated water and volatile gas can be discharged to the outside of the extruder efficiently. A screen for removing foreign matter contained in the extruded raw materials may be installed in a zone before the dice of the extruder to remove the foreign matter from the resin composition. Examples of the screen include a metal net, screen changer and sintered metal plate (such as a disk filter). Examples of the melt kneader include a Banbury mixer, kneading roll, single-screw extruder and multi-screw extruder having 3 or more screws besides the double-screw extruder.

The resin extruded as described above is pelletized by cutting with a pelletizer directly or after a strand is formed from the resin. The shape of the obtained pellet may be an ordinary shape such as columnar, square pillar-like or spherical shape but preferably a columnar shape. The columnar shape include an elliptically columnar shape. The diameter of the column is preferably 1 to 5 mm, more preferably 1.5 to 4 mm, much more preferably 2 to 3.3 mm. In the case of an elliptic column, both of its long diameter and short diameter preferably fall within the above range. The length of the column is preferably 1 to 30 mm, more preferably 2 to 5 mm, much more preferably 2.5 to 3.5 mm.

<FPD fixing frame>

The FPD fixing frame of the present invention is made of the above resin composition and has at least one snap-fit projection, hole or groove.

Preferably, the resin composition comprises 0.01 to 5 parts by weight of at least one compound (component E) selected from the group consisting of an acid group-containing lubricant, alkylalkoxysilane and alkylhydrogenosilane based on 100 parts by weight of the component A. The component C is preferably polytetrafluoroethylene. Further, the component D is preferably an alkali metal salt of a perfluoroalkylsulfonic acid.

As for the shape of the FPD fixing frame, the FPD fixing frame preferably has a short side length of 200 to 800 mm and a long side length of 300 to 1,300 mm. The long side has a larger length than the short side. The ratio of the long side length to the short side length is preferably 51/49 to 80/20, more preferably 55/45 to 75/25, much more preferably 58/42 to 35/65. The area ratio of the frame portion is preferably 10 to 30 %, more preferably 13 to 27 %, much more preferably 17 to 23 %. The area ratio of the frame portion is a percentage of the projection area of the frame portion to the projection area of a portion surrounded by the peripheral portion of the frame when the FPD fixing frame is projected on a plane parallel to the fixed plane. The projection area of the FPD fixing frame does not include the hole. Therefore, the projection area of the FPD fixing frame is an area obtained by subtracting the projection area of the space portion

within the frame from the projection area of the portion surrounded by the peripheral portion of the frame.

Further, the FPD fixing frame of the present invention preferably has at least one snap-fit projection, hole or groove on each side. The number of snap-fit projections, holes or grooves on each side is more preferably 2 or more, much more preferably 3 or more. The upper limit of the number on each side is preferably 10, more preferably 8. The total number of snap-fit projections, holes or grooves is preferably 4 to 40, more preferably 8 to 30, much more preferably 10 to 24.

The inner end portion for mounting an FPD of the FPD fixing frame of the present invention has a thickness of preferably 0.3 to 1 mm. The thickness is more preferably 0 .4 to 0. 8 mm. The resin composition for the FPD fixing frame of the present invention provides a good FPD fixing frame which has a large number of snap-fit portions and thin portions even when it is a molded product having a high probability of producing foreign matter.

<manufacture of FPD fixing frame>

The FPD fixing frame of the present invention can be obtained by injection filling a pellet of the above resin composition into the cavity of a metal mold. That is, the present invention is a method of manufacturing an FPD fixing frame having at least one snap-fit projection, hole or groove, comprising the steps of:

(1) preparing a pellet which is made of the above resin composition, achieves a V-0 rating in the UL 94 vertical burn test on a 1.5 mm-thick test specimen and does not contain a compound having a chemically bonded chlorine atom and bromine atom (step-i);
(2) injection filling the pellet into the cavity of a metal mold (step-ii); and
(3) removing the FPD fixing frame from the cavity of the metal mold (step-iii).

Examples of the injection filling in the step-ii include not only ordinary injection molding but also injection compression molding, injection press molding, gas assist injection molding, foam molding (including a method for injecting a super-critical fluid), insert molding, in-mold coating molding, insulated runner molding, quick heating and cooling molding, double-color molding, sandwich molding and super high-speed injection molding. Molding may be carried out by cold runner or hot runner system.

Preferably, molding is carried out by cold runner system. A manufacturing method by injection filling into the cavity of a metal mold which is a cold runner and pin gate is preferred. The pin gate has the effect of improving productivity. On the other hand, when a resin composition containing a lamellar filler is used, the cut section of the gate tends to become like a hangnail and the filler easily falls off from this portion. Therefore, the pin gate portion of the fixing frame before the manufacture of FPD is often treated with a high-temperature iron at a production site. In the FPD fixing frame of the present invention, the hangnail-like shape of the cut section of the gate is rarely seen as compared with a conventional glass flake. Even if the filler falls off, it rarely becomes foreign matter which exerts a bad influence upon the display of an image. Therefore, a reduction in productivity is eliminated by treating the pin gate portion.

The diameter of the pin gate is preferably 0.4 to 1.5 mm, more preferably 0.6 to 1.3 mm, much more preferably 0.8 to 1.1 mm. When the diameter of the pin gate falls below the above range, moldability tends to lower and when the diameter exceeds the above range, the cooling time becomes long, thereby reducing productivity. The number of the pin gates is preferably 4 to 30, more preferably 8 to 25, much more preferably 10 to 22. When the resin composition of the present invention is used, even if the probability of producing foreign matter is high due to a large number of gates, a satisfactory FPD fixing frame can be provided.

The mode of the present invention that the inventors of the present invention think is the best is that the preferred ranges of the above requirements are met. Typical examples are described in the following examples. It should be understood that the present invention is not limited to these examples.

Examples

Examples 1 to 6, Comparative Examples 1 to 4

(manufacture of resin composition)

A pre-mixture was prepared by mixing together an aromatic polycarbonate resin (component A), a silicate mineral (component B) or comparative filler and other components uniformly in composition shown in Table 1 or Table 2 by means of a tumbler and supplied from a first feed port located at the root of the screw of an extruder. PTFE, F114P and TMP were supplied into the tumbler as 10 wt% of a master based on the component A. The obtained pre-mixture was supplied to the first feed port (at the root of the screw) of a vented double-screw extruder having a diameter of 30 mm (TEX30XSST of The Japan Steel Works, Ltd.) and melt extruded at a cylinder temperature of 280˚C, a screw

revolution of 150 rpm, a delivery rate of 20 kg/h and a vent pressure of 3 kPa to be pelletized. A predetermined amount of the CR-741 alone was supplied to the extruder independently from a feed port at a halfway position in the cylinder by using the HYM-JS-08 liquid injector of Fuji Techno Industry, Co., Ltd. while it was heated at 80˚C. The obtained pellet was evaluated as follows.

(manufacture of FPD fixing frame)

The obtained pellet was dried at 120˚C by a hot air circulation drier for 5 hours. After drying, the pellet was molded into an FPD fixing frame shown in Fig. 1 by using an injection molding machine having a cylinder inner diameter of 50 mm (FN8000 of Nissei Jushi Kogyo Co., Ltd.). The metal mold had 1.0 mm-diameter pin gates and was of cold runner system. Molding conditions were a cylinder temperature of 310˚C, a mold temperature of 95˚C and an injection rate of 170 mm/sec. The obtained FPD fixing frame was evaluated as follows.

(I) evaluation items

(1) evaluation of characteristic properties of FPD fixing frame

(1-1) surface smoothness

A flat surface (18 in the figure) of a liquid crystal display unit mounting portion of the FPD fixing frame shown in Fig. 1 was cut out to measure the smoothness of the surface by a surface roughness meter (Surfcom1400A of Tokyo Seimitsu Co., Ltd.). The measurement was made on the same portions of all the samples and the curve of the section in a direction perpendicular to the lengthwise direction of each side of the FPD fixing frame was measured. The measurement was carried out at a cut-off value of 0.8 mm and a measurement length of 4 mm in accordance with JIS B0601 to evaluate the maximum height (Ry) of the curve of the section.

(1-2) size and number of dropped products

(1-2-1) measurement (1)

Five FPD fixing frames were bundled by a string in the same direction. The bundle of the molded products was dropped on a marble platen covered with a PET film repeatedly. The height of the drop was about 10 cm. The bundle was dropped by changing its position so that each side became parallel to the drop plane. The FPD fixing frame was dropped 10 cycles, each cycle consisting of 4 drops. The PET film on the drop plane was uniformly sucked by a vacuum cleaner having a PTFE membrane filter with a hole diameter of 1 μm at the end. The above experiment was carried out in a simple dry box vented through an HEPA filter. A new PET film was used each time an evaluation sample was changed. Foreign matter remaining on the filter was observed through a digital microscope (VH-8000 of Quence Co., Ltd.). The mean of the maximum lengths was taken as the size of foreign matter and the number of dropped products was counted.

(1-2-2) measurement (2)

Assembly and disassembly of the snap-fit male portion of the FPD fixing frame and a female portion to be mated (made of S-45C steel) were carried out on the PET film 100 times. The surfaces of the PET film and the FPD fixing frame were uniformly sucked by a cleaner having a PTFE membrane filter with a hole diameter of 1 μm at the end. The above experiment was carried out in a simple dry box vented through a HEPA filter. A new PET film was used each time the evaluation sample was changed. Foreign matter remaining on the filter was observed through a digital microscope (VH-8000 of Quence Co., Ltd.). Metal foreign matter was excluded. The mean of the maximum lengths was taken as the size of foreign matter and the number of dropped products was counted.

(1-3) influence upon image of dropped product

The foreign matter on the membrane filter excluding the metal foreign matter obtained by carrying out the same experiment as described above was adhered to the inner side of the front polarizer of the AQUOS20 of Sharp Corporation to check its influence upon the display of an image. × means that the abnormality of pixels was seen when the image was observed with naked eyes and ○ means that no abnormality was seen. The same image was observed.

(1-4) flatness of liquid crystal display unit mounting portion

A smooth flat glass unit having a thickness of 2 mm was mounted on the FPD fixing frame to check the flatness of the FPD fixing frame from the existence of unevenness. Unevenness was not seen in Examples of the present invention. All the fixing frames did not warp and were flat enough to mount the liquid crystal glass unit.

(1-5) appearance

The existence of a silver streak near the gate of the FPD fixing frame was checked. 10 shots right from the purge were abandoned and 11-th shot to 20-th shot were used to produce molded products. × means that a silver streak was seen in all the molded products, △ means that a silver streak was seen once, and ○ means that no silver streak was seen at all.

(2) evaluation of characteristic properties of material

Part of the obtained pellet was dried with a hot air circulation drier at 120˚C for 5 hours, molded into a specimen for the following tests by an injection molding machine (SG-150U of Sumitomo Heavy Industries, Ltd.) at a cylinder temperature 300˚C and a mold temperature of 80˚C, and evaluated.

(2-1) stiffness (elastic modulus in flexure)

The elastic modulus in flexure (MPa) was measured in accordance with ISO178. The test specimen was 80 mm in length, 10 mm in width and 4 mm in thickness.

(2-2) heat resistance

The deflection temperature under load was measured in accordance with ISO 75-1 or 75-2. The measurement load was 1.80 MPa.

(2-3) flame retardancy

The UL 94 vertical combustion test was carried out on a 1.5 mm-thick specimen and its rating was evaluated.

(II) Symbol of each component contained in composition

(component A)

PC-1: linear aromatic polycarbonate resin powder synthesized from bisphenol A, p-tert-butylphenol as a terminal capping agent and phosgene by interfacial polycondensation method (manufactured by Teijin Chemicals Ltd.: Panlite L-1225WX having a viscosity average molecular weight of 19,700)
PC-2: linear aromatic polycarbonate resin powder synthesized from bisphenol A, p-tert-butylphenol as a terminal capping agent and phosgene by interfacial polycondensation method (manufactured by Teijin Chemicals Ltd.: CM-1000 having a viscosity average molecular weight of 16,000)

(component B)

TALC: talc (manufactured by Hayashi Kasei Kogyo Co., Ltd.: Upn HS-T0.8, lamellar, average particle diameter of 2 μm) MICA-1: mica (manufactured by Yamaguchi Mica Kogyosho Co., Ltd.: A-41, lamellar, average particle diameter of 40 μm) (comparative component B)
MICA-2: mica (manufactured by Hayashi Kasei Kogyo Co., Ltd.: MC-40, lamellar, average particle diameter of 250 μm)
GFL: granular glass flakes (manufactured by Nippon Sheet Glass Co., Ltd.: Freka REFG-301, average particle diameter of glass flakes of 140 μm, average thickness of glass flakes of 5 μm)

(component C)

PTFE: polytetrafluoroethylene having fibril formability (manufactured by Daikin Industries, Ltd.: Polyflon MPA FA500)

(component D)

F114P: potassium perfluorobutanesulfonate (manufactured by Dainippon Ink and Chemicals, Inc.: Megafac F-114P)
(component E)
AY048: isobutyltrimethoxysilane (manufactured by Toray Dow Corning Co., Ltd.: AY43-048)
K3103: decyltrimethoxysilane (manufactured by Shin-Etsu Silicone Co., Ltd.: KBM3103)
DC30: acid modified olefin wax composed of a copolymer of maleic anhydride and an α-olefins (manufactured by Mitsubishi Chemical Co., Ltd.: Diacarna PA30M)

(others)

TMP: phosphorus-based stabilizer (manufactured by Daihachi Chemical Industry Co., Ltd.: TMP)
CR741: phosphoric ester essentially composed of bisphenol A bis (diphenylphosphate) (manufactured by Daihachi Chemical Industry Co., Ltd.: CR-741)
PX200: resorcinol bis(dixylenylphosphate) (manufactured by Daihachi Chemical Industry Co., Ltd.: PX200)

Table 1

| Item | | | | Unit | Ex.1 | Ex.2 | Ex.3 | Ex.4 | Ex.5 | Ex.6 |
|---|---|---|---|---|---|---|---|---|---|---|
| Composition | Component A | | PC-1 | pbw | 100 | 50 | 50 | 100 | 100 | |
| | | | PC-2 | pbw | | 50 | 50 | | | 100 |
| | Component B | | TALC | pbw | 18 | 18 | 18 | 6 | | 12 |
| | | | MICA-1 | pbw | | | | 18 | 18 | |
| | Component C | | PTFE | pbw | 0.5 | 0.5 | 0.5 | 0.5 | 0.5 | 0.5 |
| | Component D | | F114P | pbw | 0.04 | 0.04 | 0.04 | 0.04 | 0.04 | 0.04 |
| | Component E | | AY048 | pbw | | 0.6 | | | | 0.6 |
| | | | K3103 | pbw | | | 0.6 | | | |
| | | | DC30 | pbw | | 0.7 | 0.7 | | | 0.7 |
| | Other Components | | TMP | pbw | 0.05 | 0.05 | 0.05 | 0.05 | 0.05 | 0.05 |
| Evaluation of characteristic properties with flat panel display | Surface smoothness | | maximum height | µm | 0.7 | 0.8 | 0.8 | 0.7 | 0.8 | 0.7 |
| | Dropped product | Measurement (1) | size | µm | 5 | 4 | 4 | 8 | 9 | 4 |
| | | | Number | | 8 | 9 | 8 | 11 | 12 | 6 |
| | | | Influence upon image | - | ○ | ○ | ○ | ○ | ○ | ○ |
| | | Measurement (2) | size | µm | 6 | 5 | 5 | 8 | 9 | 5 |
| | | | Number | | 7 | 8 | 7 | 10 | 10 | 6 |
| | | | Influence upon image | - | ○ | ○ | ○ | ○ | ○ | ○ |
| | Silver streak | | | - | △ | ○ | ○ | △ | △ | ○ |
| Evaluation of properties of material | Elastic modulus in flexure | | | MPa | 3950 | 3920 | 3870 | 5600 | 4830 | 3300 |
| | Heat resistance | | 1.80MPa | ˚C | 131 | 130 | 130 | 137 | 134 | 130 |
| | Flame retardancy | | 1.5mmt | - | V-0 | V-0 | V-0 | V-0 | V-0 | V-0 |

Ex. : Example pbw : Part(s) by weight

Table 2

| Item | | | | Unit | C.Ex.1 | C.Ex.2 | C.Ex.3 | C.Ex.4 |
|---|---|---|---|---|---|---|---|---|
| Composition | Component A | | PC-1 | pbw | 100 | 100 | 100 | 100 |
| | Component B | | TALC | pbw | | | 18 | 18 |
| | Comparative component B | | MICA-2 | pbw | 18 | | | |
| | | | GFL | pbw | | 18 | | |
| | Component C | | PTFE | pbw | 0.5 | 0.5 | 0.5 | 0.5 |
| | Component D | | F114P | pbw | 0.04 | 0.04 | | |
| | Other Components | | CR741 | pbw | | | 8 | |
| | | | PX200 | pbw | | | | 6 |
| | | | TMP | pbw | 0.05 | 0.05 | 0.05 | 0.05 |
| Evaluation of characteristic properties with flat panel display | Surface smoothness | | maximum height | μm | 3.2 | 1.8 | 0.7 | 0.7 |
| | Dropped product | measurement (1) | size | μm | 50 | 30 | 5 | 5 |
| | | | Number | | 48 | 32 | 8 | 9 |
| | | | Influence upon image | - | × | × | ○ | ○ |
| | | Measurement (2) | size | μm | 45 | 25 | 6 | 6 |
| | | | Number | | 30 | 20 | 7 | 8 |
| | | | Influence upon image | - | × | × | ○ | ○ |
| | Silver streak | | | - | ○ | ○ | ○ | ○ |
| Evaluation of properties of material | Elastic modulus in flexure | | | MPa | 4380 | 4220 | 4080 | 4100 |
| | Heat resistance | | 1.80MPa | ˚C | 133 | 133 | 102 | 106 |
| | Flame retardancy | | 1.5mmt | - | V-1 | V-1 | V-0 | V-0 |
| C.Ex. : Comparative Example pbw : Part(s) by weight | | | | | | | | |

As obvious from Tables 1 and 2, it is understood that the FPD fixing frame of the present invention has excellent characteristic properties that cannot be attained with other fillers and other compositions.

Effect of the Invention

The FPD fixing frame of the present invention has excellent flame retardancy without containing an organic halogen-based flame retardant or a phosphate-based flame retardant. The FPD fixing frame of the present invention is excellent in stiffness, heat resistance and dimensional stability. Further, the FPD fixing frame of the present invention has excellent mar resistance and rarely produces foreign matter that exerts a bad influence in an image display and has a good surface appearance. By using the FPD fixing frame of the present invention, a large-sized high image-quality FPD can be manufactured.

By using the resin composition of the present invention, an FPD fixing frame having excellent flame retardancy, stiffness, heat resistance, dimensional stability and mar resistance can be manufactured.

Industrial Feasibility

The FPD fixing frame of the present invention can be used in a FPD for TVs, digital still cameras, video cameras,

personal computers, mobile phones, pinball games and car navigation systems.

## Claims

**1.** A resin composition for use in a flat panel display fixing frame having at least one snap-fit projection, hole or groove, comprising:

(i) 100 parts by weight of an aromatic polycarbonate resin (component A);
(ii) 1 to 30 parts by weight of muscovite mica (component B-2) or component B-2 and talc (component B-1), wherein the component B-2 having an average particle diameter measured by a laser diffraction/scattering method of 0.5 to 50 μm and the component B-1 having an average particle diameter measured by an X-ray transmission method of 0.5 to 9 μm (component B);
(iii) 0.01 to 0.6 part by weight of a fluorine-containing dripping preventing agent (component C); and
(iv) 0.001 to 1.0 part by weight of an alkali (earth) metal salt of an organic sulfonic acid (component D).

**2.** The resin composition according to claim 1 which further comprises 0.01 to 5 parts by weight of at least one compound (component E) selected from the group consisting of an acid group-containing lubricant, alkylalkoxysilane and alkylhydrogenosilane based on 100 parts by weight of the component A.

**3.** The resin composition according to claim 1, wherein the component A is an aromatic polycarbonate resin composed of a recurring unit represented by the following formula and having a viscosity average molecular weight of 10,000 to 30,000.

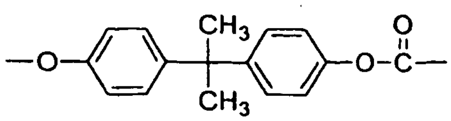

**4.** The resin composition according to claim 1, wherein the component C is polytetrafluoroethylene.

**5.** The resin composition according to claim 1, wherein the component D is an alkali metal salt of a perfluoroalkylsulfonic acid.

**6.** The resin composition according to claim 1 which achieves a V-0 rating in the UL 94 vertical burn test on a 1.5 mm-thick test specimen and does not contain a compound having a chemically bonded chlorine atom and bromine atom.

**7.** A flat panel display fixing frame having at least one snap-fit projection, hole or groove and comprising:

(i) 100 parts by weight of an aromatic polycarbonate resin (component A);
(ii) 1 to 30 parts by weight of muscovite mica (component B-2) or component B-2 and talc (component B-1), wherein the component B-2 having an average particle diameter measured by a laser diffraction/scattering method of 0.5 to 50 μm and the component B-1 having an average particle diameter measured by an X-ray transmission method of 0.5 to 9 μm (component B);
(iii) 0.01 to 0.6 part by weight of a fluorine-containing dripping preventing agent (component C); and
(iv) 0.001 to 1.0 part by weight of an alkali (earth) metal salt of an organic sulfonic acid (component D).

**8.** The frame according to claim 7 which further comprises 0.01 to 5 parts by weight of at least one compound (component E) selected from the group consisting of an acid group-containing lubricant, alkylalkoxysilane and alkylhydrogenosilane based on 100 parts by weight of the component A.

**9.** The frame according to claim 7, wherein the component A is an aromatic polycarbonate resin composed of a recurring unit represented by the following formula and having a viscosity average molecular weight of 10,000 to 30,000.

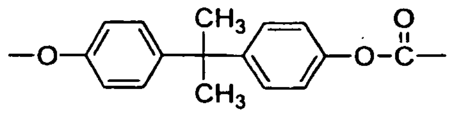

**10.** The frame according to claim 7, wherein the component C is polytetrafluoroethylene.

**11.** The frame according to claim 7, wherein the component D is an alkali metal salt of a perfluoroalkylsulfonic acid.

**12.** The frame according to claim 7 which has a short side length of 200 to 800 mm and a long side length of 300 to 1, 300 mm.

**13.** The frame according to claim 7 which has at least one snap-fit projection, hole or groove on each side.

**14.** The frame according to claim 7 which has an inner end portion with a thickness of 0.3 to 1 mm for mounting a flat panel display.

**15.** A method of manufacturing a flat panel display fixing frame having at least one snap-fit projection, hole or groove, comprising the steps of:

(1) preparing a pellet of a resin composition which comprises (i) 100 parts by weight of an aromatic polycarbonate resin (component A), (ii) 1 to 30 parts by weight of at least one lamellar silicate mineral (component B) selected from the group consisting of talc having an average particle diameter measured by an X-ray transmission method of 0.5 to 9 μm (component B-1) and muscovite mica having an average particle diameter measured by a laser diffraction/scattering method of 0.5 to 50 μm (component B-2), (iii) 0.01 to 0.6 part by weight of a fluorine-containing dripping preventing agent (component C), and (iv) 0.001 to 1.0 part by weight of an alkali (earth) metal salt of an organic sulfonic acid (component D), achieves a V-0 rating in the UL 94 vertical burn test on a 1.5 mm-thick test specimen and does not contain a compound having a chemically bonded chlorine atom and bromine atom (step-i);
(2) injection filling the pellet into the cavity of a metal mold (step-ii); and
(3) taking out a flat panel display fixing frame from the cavity of the metal mold (step-iii).

**16.** The method according to claim 15, wherein the step-ii is to injection fill the pellet into the cavity of the metal mold through pin gates having a diameter of 0.4 to 1.5 mm.

**17.** The method according to claim 15, wherein the number of pin gates is 4 to 30.

**Patentansprüche**

**1.** Harzzusammensetzung zur Verwendung in einem Flachbildschirmfixierrahmen mit mindestens einem Schnappverbindungsvorsprung, einem Loch oder einer Nut, umfassend:

(i) 100 Gewichtsteile eines aromatischen Polycarbonatharzes (Komponente A);
(ii) 1 bis 30 Gewichtsteile Muskovitglimmer (Komponente B-2) oder Komponente B-2 und Talk (Komponente B-1), wobei die Komponente B-2 einen mittleren Partikeldurchmesser, gemessen mittels eines Laserbeugungs/Streu-Verfahrens, von 0,5 bis 50 μm aufweist und die Komponente B-1 einen mittleren Partikeldurchmesser, gemessen mittels eines Röntgenstrahlentransmissionsverfahrens, von 0,5 bis 9 μm (Komponente B) aufweist;
(iii) 0,01 bis 0,6 Gewichtsteile eines fluorenthaltenden Tropfverhinderungsmittels (Komponente C); und
(iv) 0,001 bis 1,0 Gewichtsteile eines (Erd)alkalimetallsalzes einer organischen Sulfonsäure (Komponente D).

**2.** Harzzusammensetzung gemäß Anspruch 1, welche weiterhin 0,01 bis 5 Gewichtsteile mindestens einer Verbindung (Komponente E), ausgewählt aus der Gruppe, bestehend aus einem Säuregruppe-enthaltenden Schmiermittel, Alkylalkoxysilan und Alkylhydrogenosilan, bezogen auf 100 Gewichtsteile der Komponente A, umfasst.

**3.** Harzzusammensetzung gemäß Anspruch 1, wobei die Komponente A ein aromatisches Polycarbonatharz ist, das aus einer Wiederholungseinheit, dargestellt durch die folgende Formel, zusammengesetzt ist und ein viskositätsmittleres Molekulargewicht von 10.000 bis 30.000 aufweist.

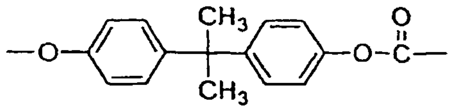

**4.** Harzzusammensetzung gemäß Anspruch 1, wobei die Komponente C Polytetrafluorethylen ist.

**5.** Harzzusammensetzung gemäß Anspruch 1, wobei die Komponente D ein Alkalimetallsalz einer Perfluoralkylsulfonsäure ist.

**6.** Harzzusammensetzung gemäß Anspruch 1, welche eine V-0-Einstufung in dem Vertikal-Brandtest nach UL 94 bei einem 1,5 mm dicken Prüfkörper erreicht und die keine Verbindung mit einem chemisch gebundenen Chloratom und Bromatom enthält.

**7.** Flachbildschirmfixierrahmen mit mindestens einem Schnappverbindungsvorsprung, einem Loch oder einer Nut, und umfassend:

(i) 100 Gewichtsteile eines aromatischen Polycarbonatharzes (Komponente A);
(ii) 1 bis 30 Gewichtsteile Muskovitglimmer (Komponente B-2) oder Komponente B-2 und Talk (Komponente B-1), wobei die Komponente B-2 einen mittleren Partikeldurchmesser, gemessen mittels eines Laserbeugungs/Streu-Verfahrens, von 0,5 bis 50 μm aufweist und die Komponente B-1 einen mittleren Partikeldurchmesser, gemessen mittels eines Röntgenstrahlentransmissionsverfahrens, von 0,5 bis 9 μm (Komponente B) aufweist;
(iii) 0,01 bis 0,6 Gewichtsteile eines fluorenthaltenden Tropfverhinderungsmittels (Komponente C); und
(iv) 0,001 bis 1,0 Gewichtsteile eines (Erd)alkalimetallsalzes einer organischen Sulfonsäure (Komponente D).

**8.** Rahmen gemäß Anspruch 7, welcher weiterhin 0,01 bis 5 Gewichtsteile mindestens einer Verbindung (Komponente E), ausgewählt aus der Gruppe, bestehend aus einem Säuregruppeenthaltenden Schmiermittel, Alkylalkoxysilan und Alkylhydrogenosilan, bezogen auf 100 Gewichtsteile der Komponente A, umfasst.

**9.** Rahmen gemäß Anspruch 7, wobei die Komponente A ein aromatisches Polycarbonatharz ist, das aus einer Wiederholungseinheit, dargestellt durch die folgende Formel, zusammengesetzt ist und ein viskositätsmittleres Molekulargewicht von 10.000 bis 30.000 aufweist.

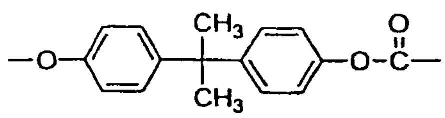

**10.** Rahmen gemäß Anspruch 7, wobei die Komponente C Polytetrafluorethylen ist.

**11.** Rahmen gemäß Anspruch 7, wobei die Komponente D ein Alkalimetallsalz einer Perfluoralkylsulfonsäure ist.

**12.** Rahmen gemäß Anspruch 7, welcher eine Länge der kurzen Seite von 200 bis 800 mm und eine Länge der langen Seite von 300 bis 1.300 mm aufweist.

**13.** Rahmen gemäß Anspruch 7, welcher mindestens einen Schnappverbindungsvorsprung, ein Loch oder eine Nut auf jeder Seite aufweist.

**14.** Rahmen gemäß Anspruch 7, welcher einen inneren Endabschnitt mit einer Dicke von 0,3 bis 1 mm zum Befestigen eines Flachbildschirms aufweist.

**15.** Verfahren zum Herstellen eines Flachbildschirmfixierrahmens mit mindestens einem Schnappverbindungsvorsprung, einem Loch oder einer Nut, umfassend die Stufen:

(1) Herstellen von Pellets einer Harzzusammensetzung, welche umfasst (i) 100 Gewichtsteile eines aromatischen Polycarbonatharzes (Komponente A), (ii) 1 bis 30 Gewichtsteile mindestens eines lamellaren Silikatminerals (Komponente B), ausgewählt aus der Gruppe, bestehend aus Talk mit einem mittleren Partikeldurchmesser, gemessen mittels eines Röntgenstrahlentransmissionsverfahrens, von 0,5 bis 9 μm (Komponente B-1) und Muskovitglimmer mit einem mittleren Partikeldurchmesser, gemessen mittels eines Laserbeugungs/Streu-Verfahrens, von 0,5 bis 50 μm (Komponente B-2), (iii) 0,01 bis 0,6 Gewichtsteile eines fluorenthaltenden Tropfverhinderungsmittels (Komponente C) und (iv) 0,001 bis 1,0 Gewichtsteile eines (Erd)alkalimetallsalzes einer organischen Sulfonsäure (Komponente D), eine V-0-Einstufung in dem Vertikal-Brandtest nach UL 94 bei einem 1,5 mm dicken Prüfkörper erreicht und keine Verbindung mit einem chemisch gebundenen Chloratom und Bromatom enthält (Stufe-i);
(2) Einspritzfüllen des Pellets in die Kavität einer Metallform (Stufe-ii); und
(3) Herausnehmen eines Flachbildschirmfixierrahmens aus der Kavität der Metallform (Stufe-iii).

**16.** Verfahren gemäß Anspruch 15, wobei die Stufe-ii dazu dient, die Pellets in die Kavität der Metallform durch Punktangüsse mit einem Durchmesser von 0,4 bis 1,5 mm durch Einspritzen einzufüllen.

**17.** Verfahren gemäß Anspruch 15, wobei die Anzahl der Punktangüsse 4 bis 30 beträgt.

## Revendications

**1.** Composition de résine pour utilisation dans un châssis de fixation pour écrans plats ayant au moins un épaulement pour une liaison par encliquetage, un trou ou une rainure et comprenant

(i) 100 parties en poids d'une résine de polycarbonate aromatique (composant A);
(ii) 1 à 30 parties en poids de mica muscovite (composant B-2) ou de composant B-2 et talc (composant B-1), le composant B-2 ayant un diamètre moyen des particules, mesuré par une méthode de diffraction/diffusion laser, de 0,5 à 50 μm et le composant B-1 ayant un diamètre moyen des particules, mesuré par une méthode de transmission de rayons X, de 0,5 à 9 μm, (composant B);
(iii) 0,01 à 0,6 parties en poids d'un agent fluoré pour éviter le gouttage (composant C) et
(iv) 0,001 à 1,0 parties en poids d'un sel de métal alcalin ou alcalino-terreux d'un acide sulfonique organique (composant D).

**2.** Composition de résine selon la revendication 1 comprenant en outre 0,01 à 5 parties en poids d'au moins d'un composé (composant E), choisi dans le groupe qui consiste en un lubrifiant contenant un groupe d'acide, alkylalcoxysilane et alkyle hydrogénosilane sur la base de 100 parties en poids du composant A.

**3.** Composition de résine selon la revendication 1, dans laquelle le composant A est une résine de polycarbonate aromatique constitué par un motif répété représenté par la formule suivante et ayant une masse moléculaire moyenne en viscosité de 10 000 à 30 000.

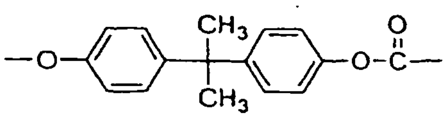

**4.** Composition de résine selon la revendication 1, dans laquelle le composant C est le polytétrafluoroéthylène.

**5.** Composition de résine selon la revendication 1, dans laquelle le composant D est un sel de métal alcalin d'un acide perfluoroalkylsulfonique.

**6.** Composition de résine selon la revendication 1, qui atteint la qualité V-O par le test à la flamme verticale UL 94 avec un spécimen à tester ayant une épaisseur de 1,5 mm et qui ne contient pas un composé ayant un atome de chlore et un atome de brome lié chimiquement.

**7.** Châssis de fixation pour écrans plats ayant au moins un épaulement pour une liaison par encliquetage, un trou ou une rainure comprenant

(i) 100 parties en poids d'une résine de polycarbonate aromatique (composant A);
(ii) 1 à 30 parties en poids de mica muscovite (composant B-2) ou de composant B-2 et talc (composant B-1), le composant B-2 ayant un diamètre moyen des particules, mesuré par une méthode de diffraction/diffusion laser, de 0,5 à 50 μm et le composant B-1 ayant un diamètre moyen des particules, mesuré par une méthode de transmission de rayons X, de 0,5 à 9 μm, (composant B);
(iii) 0,01 à 0,6 parties en poids d'un agent fluoré pour éviter le gouttage (composant C) et
(iv) 0,001 à 1,0 parties en poids d'un sel de métal alcalin ou alcalino-terreux d'un acide sulfonique organique (composant D).

**8.** Châssis selon la revendication 7, comprenant en outre 0,01 à 5 parties en poids d'au moins d'un composé (composant E) choisi dans le groupe qui consiste en un lubrifiant contenant un groupe d'acide, alkylalcoxysilane et alkyle hydrogénosilane sur la base de 100 parties en poids du composant A.

**9.** Châssis selon la revendication 7, dans lequel le composant A est une résine de polycarbonate aromatique constitué par un motif répété représenté par la formule suivante et ayant une masse moléculaire moyenne en viscosité de 10 000 à 30 000.

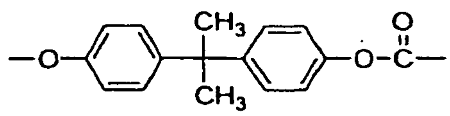

**10.** Châssis selon la revendication 7, dans lequel le composant C est le polytétrafluoroéthylène.

**11.** Châssis selon la revendication 7, dans lequel le composant D est un sel de métal alcalin d'un acide perfluoroalkylsulfonique.

**12.** Châssis selon la revendication 7, qui a une longueur du côté court de 200 à 800 mm et une longueur du côté longue de 300 à 1300 mm.

**13.** Châssis selon la revendication 7, qui a au moins un épaulement pour une liaison par encliquetage, un trou ou une rainure à chaque côté.

**14.** Châssis selon la revendication 7, qui a une section finale intérieure avec une épaisseur de 0,3 à 1 mm pour le montage d'un écran plat.

**15.** Procédé de production d'un châssis de fixation pour écrans plats ayant au moins un épaulement pour une liaison par encliquetage, un trou ou une rainure, comprenant les étapes consistant à:

(1) préparer un pellet d'une composition de résine qui comprend:

(i) 100 parties en poids d'une résine de polycarbonate aromatique (composant A); (ii) 1 à 3 parties en poids d'au moins un silicate lamellaire (composant B), choisi dans le groupe consistant en le talc ayant un diamètre moyen de particules mesuré par une méthode de transmission de rayon X, de 0,5 à 9 μm (composant B-1) et le mica muscovite ayant un diamètre moyen de particules mesuré par une méthode de diffraction/ diffusion laser, de 0,5 à 50 μm (composant B-2), (iii) 0,01 à 0,6 parties en poids d'un agent fluoré pour éviter le gouttage (composant C) et (iv) 0,001 à 1,0 parties en poids d'un sel de métal alcalin ou alcalino-terreux d'un acide sulfonique organique (composant D), atteint la qualité V-0 par le test à la flamme verticale UL 94 avec un spécimen à tester ayant une épaisseur de 1,5 mm et qui ne contient pas un composé ayant un atome de chlore ou un atome de brome lié chimiquement (étape-i);

(2) charger le pellet par injection dans la cavité d'un moule en métal (étape ii) et
(3) démouler un châssis de fixation pour écrans plats de la cavité d'un moule en métal (étape iii).

**16.** Procédé selon la revendication 15, dans lequel l'étape-ii consistant à charger le pellet par injection dans la cavité du moule en métal par des culots d'injection ayant un diamètre de 0,4 à 1,5 mm.

**17.** Procédé selon la revendication 15, dans lequel le nombre des culots d'injection est 4 à 30.

Fig. 1

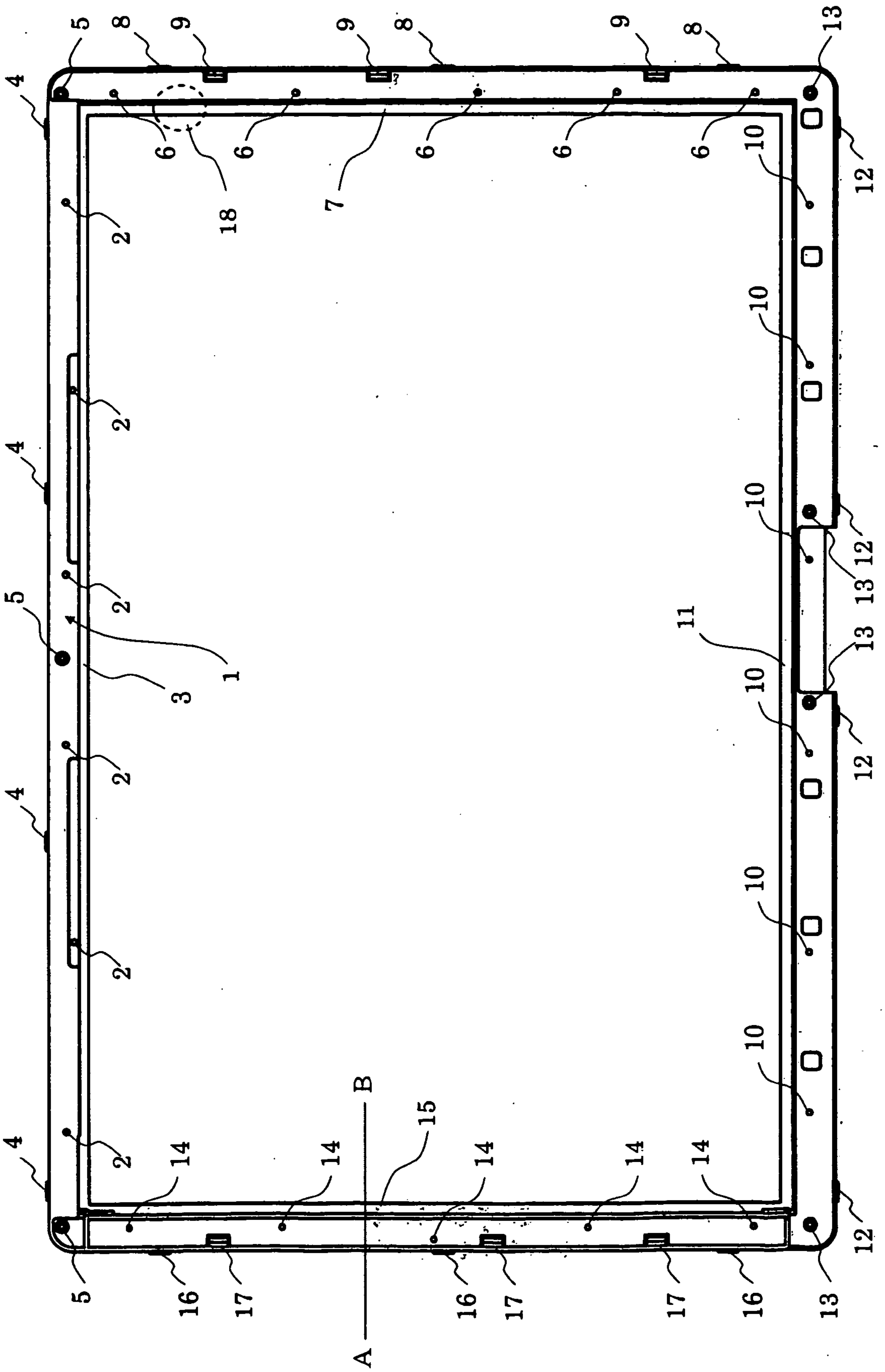

Fig. 2

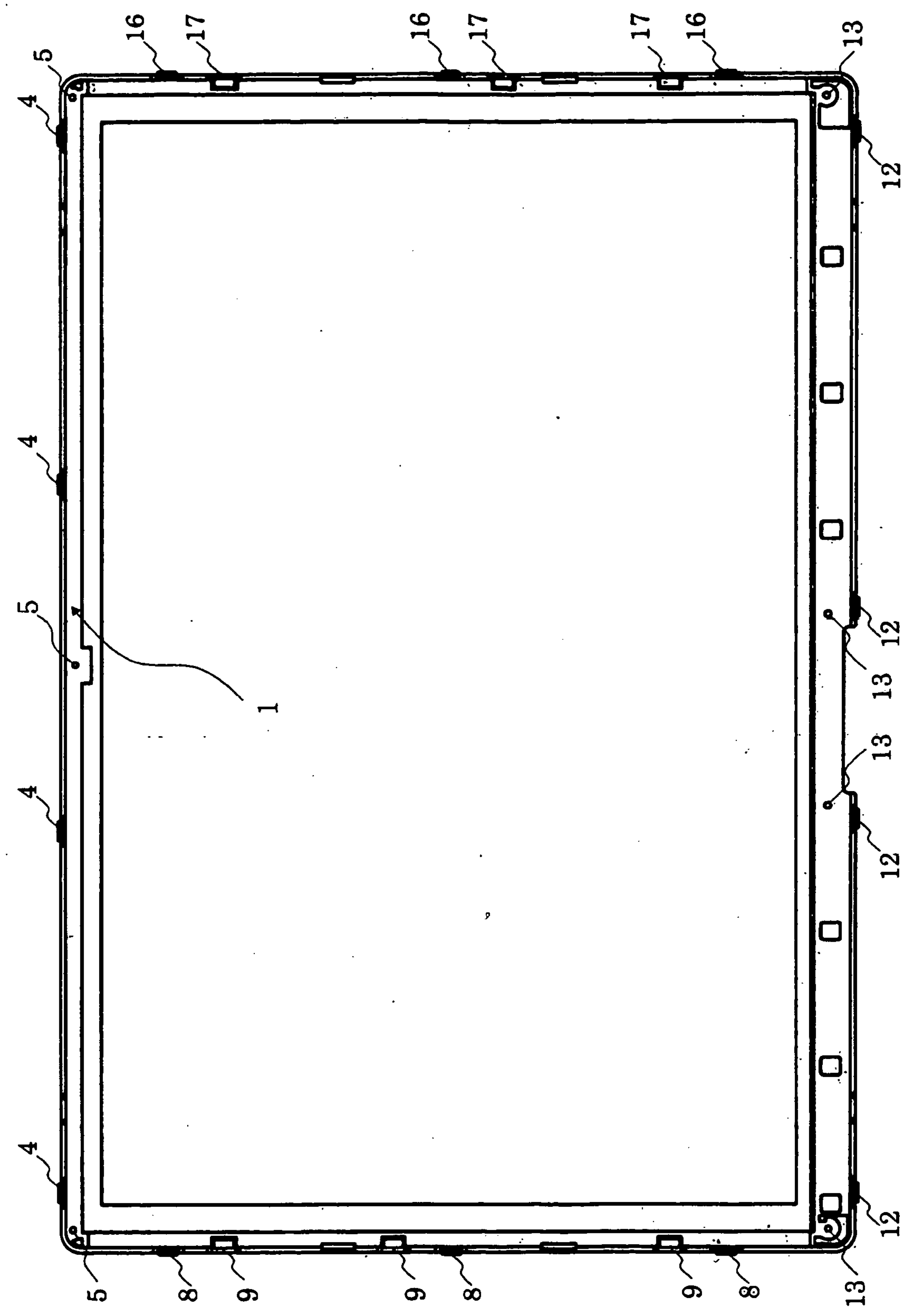

Fig. 3

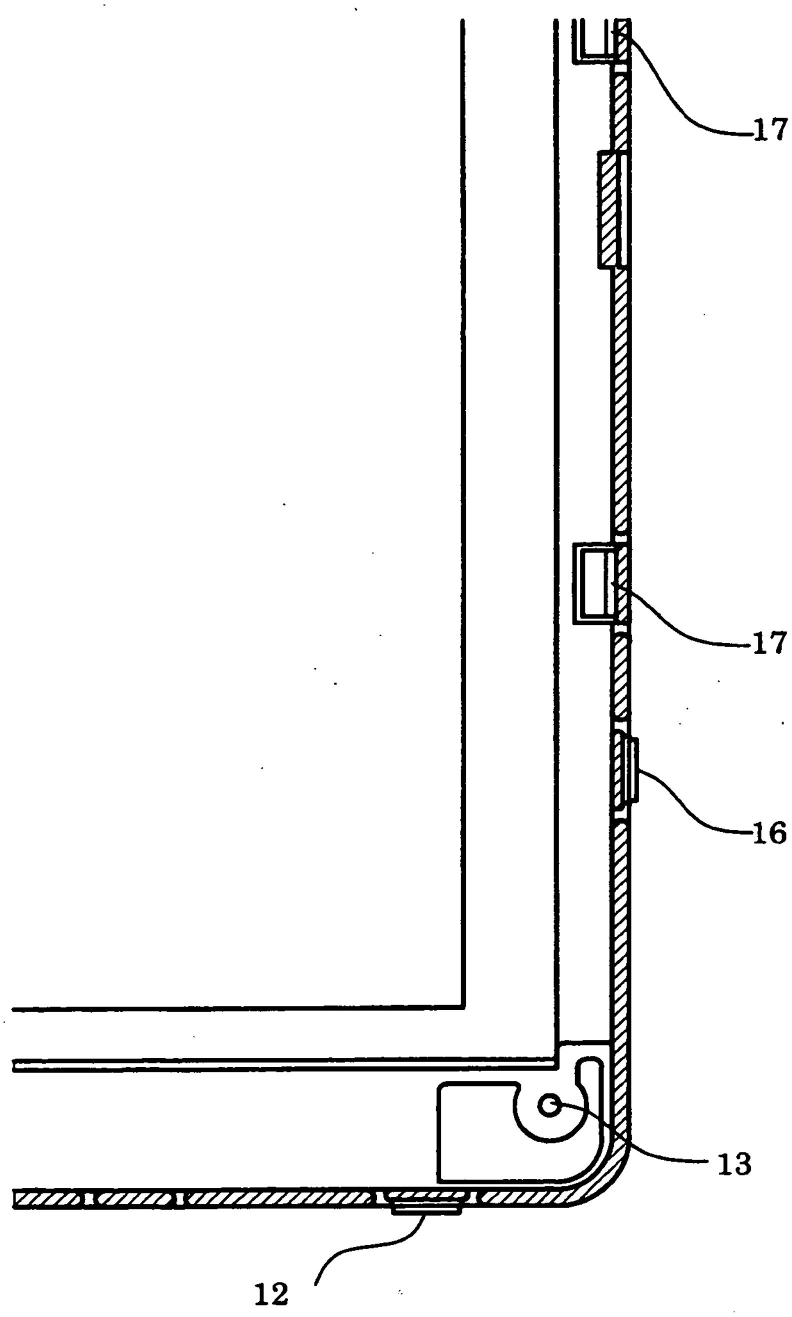

Fig. 4

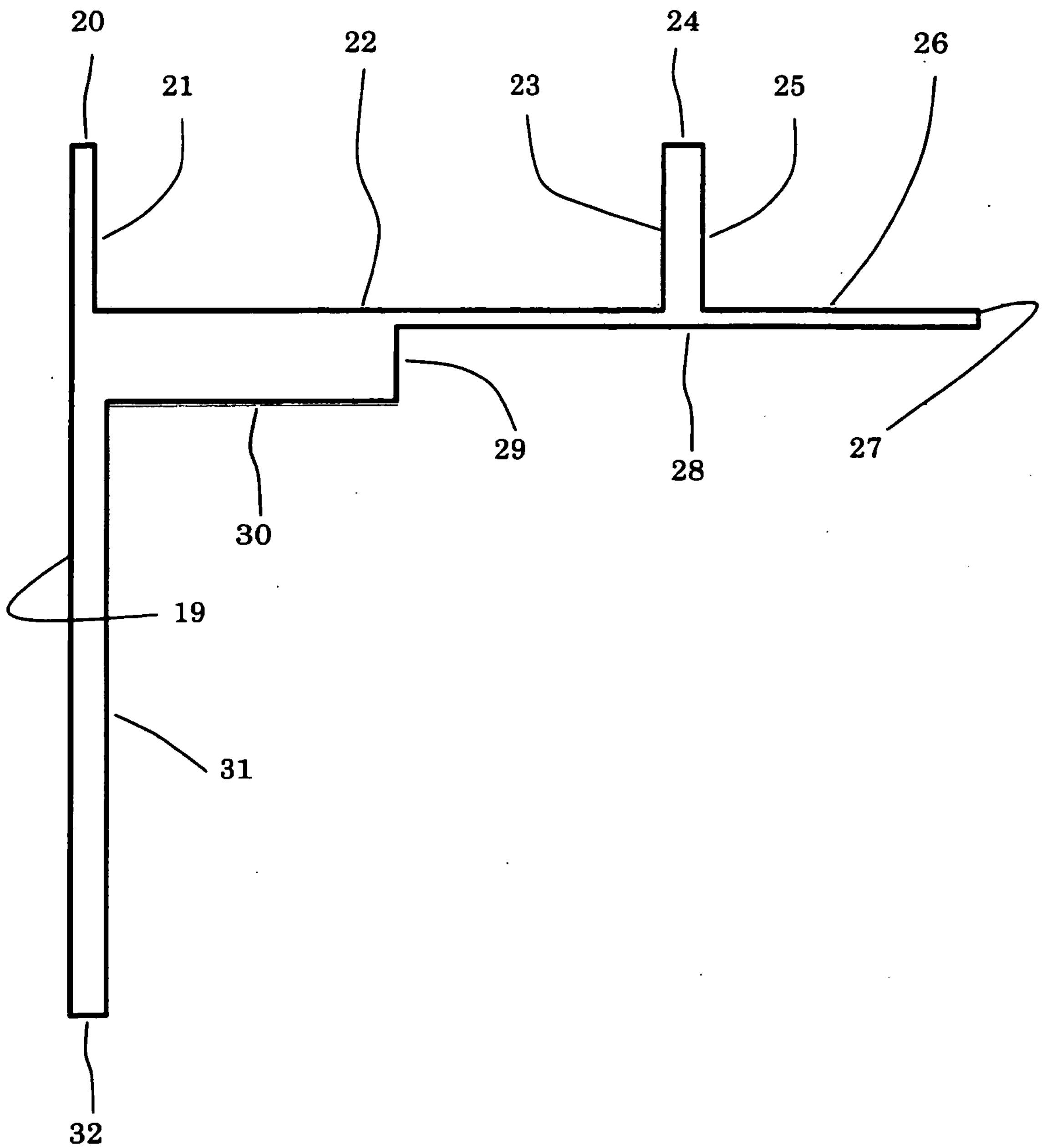

Fig. 5

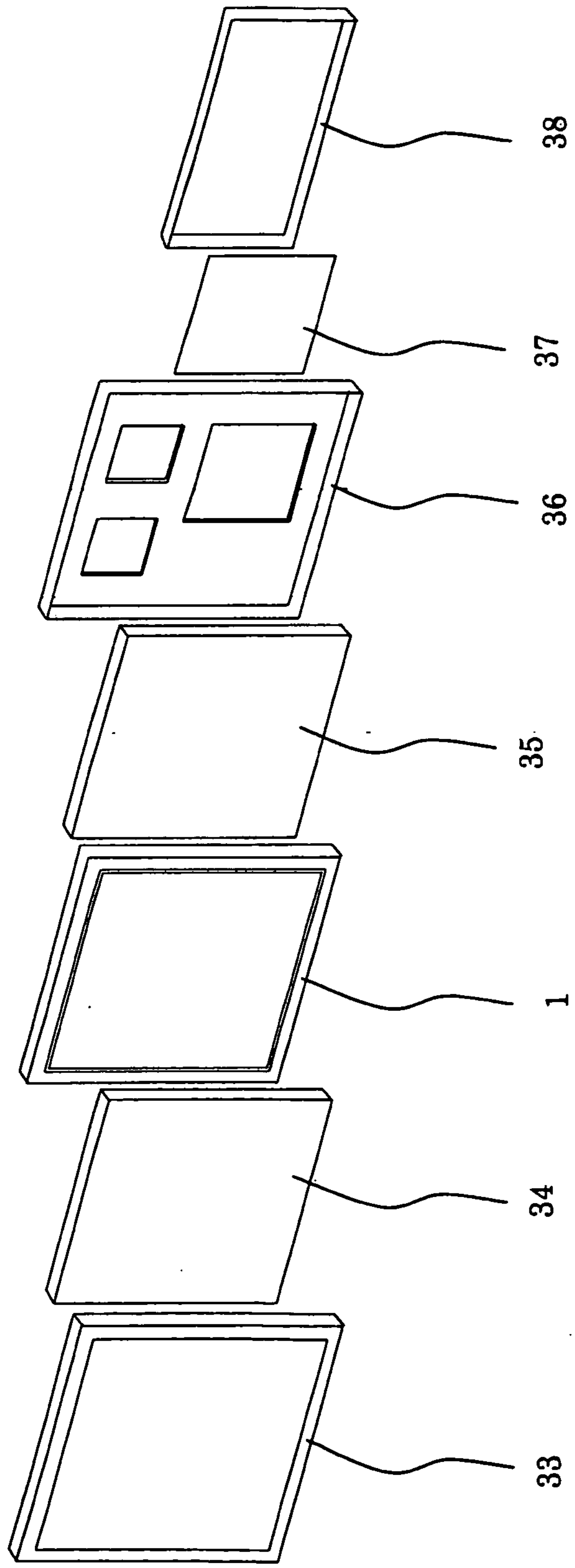

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8152608 A
- JP 2003226805 A
- JP 2002294063 A
- JP 2003082218 A
- JP 2003206398 A
- JP 6172508 A
- JP 8027370 A
- JP 2001055435 A
- JP 2002117580 A
- US 4379910 A
- JP 6145520 A
- JP 60258263 A
- JP 63154744 A
- JP 4272957 A
- JP 6220210 A
- JP 8188653 A
- JP 9095583 A
- JP 11029679 A
- JP 2004137472 A
- JP 7233160 A
- JP 2004083850 A